# FASCICULE DE BREVET EUROPEEN

(11) **EP 3 581 836 B1**
(45) Date de publication et mention de la délivrance du brevet: **24.02.2021**
(21) Numéro de dépôt: 19180253.7
(22) Date de dépôt: 14.06.2019
(51) Int. Cl.: F16L 15/04, F16L 29/04, F16L 37/23, F16L 37/32

(54) **RACCORD FLUIDIQUE**
FLÜSSIGKEITSKUPPLUNG
FLUID COUPLER

(30) Priorité: 15.06.2018 FR 1855267
(43) Date de publication de la demande: 18.12.2019
(73) Titulaire: Staubli Faverges, 74210 Faverges-Seythenex (FR)
(72) Inventeur: TIBERGHIEN, Alain-Christophe, 74320 SEVRIER (FR); DURIEUX, Christophe, 73200 GILLY SUR ISERE (FR); MAYER, Romain, 73400 HERY SUR UGINE (FR)
(74) Mandataire: Lavoix

(56) Documents cités:
- GB-A- 2 310 471
- US-A- 3 498 324
- US-A- 3 570 543

## Description

La présente invention concerne un raccord fluidique.

La présente invention concerne le domaine technique des raccords de conduites de fluides, de préférence du type « raccord rapide », notamment de liquides sous pression.

Les éléments de raccord du domaine de l'invention permettent d'assurer facilement et rapidement une connexion étanche pour le transport d'un fluide. Deux éléments de raccord de type complémentaire, par exemple de type mâle et de type femelle, sont adaptés pour être accouplés afin de raccorder deux systèmes, tels que des canalisations, des réservoirs, ou des machines. En pratique, chaque élément de raccord comporte un corps qui délimite un conduit interne pour le passage du fluide. Plus particulièrement, l'invention trouve son application pour raccorder un système de refroidissement, notamment pour du matériel électronique. Un des éléments de raccord est connecté à une conduite de fluide sous pression située en amont. Dans le cas du système de refroidissement susmentionné, l'élément de raccord conduit ou contient le plus souvent, en tant que fluide, un liquide caloporteur, par exemple de l'eau comprenant optionnellement un additif, pouvant atteindre une pression d'environ 20 bars en configuration désaccouplée de l'élément de raccord. Ce niveau de pression induit un effort d'accouplement des éléments de raccord élevé, difficilement atteignable manuellement.

US 3,498,324 décrit un raccord rapide, comprenant deux éléments, l'un comprenant un corps femelle de réception d'un corps mâle de l'autre élément, chaque corps étant traversé par un passage principal de fluide. Dans son passage principal respectif, chaque élément comprend une valve principale. Par rapport au corps de l'élément concerné, la valve principale évolue entre une position de fermeture, vers l'avant de l'élément, dans laquelle la valve principale obture le passage principal, et une position d'ouverture, vers l'arrière, dans laquelle la valve principale autorise le passage du fluide au travers du passage principal. Un ressort ramène constamment la valve principale en position de fermeture. Chaque valve principale définit un passage secondaire au sein duquel une valve secondaire est logée. Par rapport à la valve principale associée, la valve secondaire évolue également entre une position de fermeture, vers l'avant, dans laquelle la valve secondaire obture le passage secondaire, et une position d'ouverture, vers l'arrière, dans laquelle la valve secondaire autorise le passe du fluide au travers du passage secondaire. Un autre ressort rappelle constamment la valve secondaire en position de fermeture. Chaque valve secondaire présente une portion qui, en position de fermeture de la valve secondaire, dépasse légèrement de l'extrémité du passage secondaire dans la valve principale, vers l'avant.

Cependant, dans ce raccord connu, l'étanchéité entre corps mâle et femelle n'est assurée au cours de l'accouplement qu'après l'ouverture des valves secondaires, si bien qu'une fuite du fluide sous pression se produit nécessairement, de façon transitoire, lors du passage entre la configuration désaccouplée et la configuration accouplée, dans un but d'abaissement de la pression pour faciliter l'accouplement. Cette fuite peut s'avérer préjudiciable, notamment dans le cas où l'on souhaite raccorder un réseau de liquide électriquement conducteur, tel qu'un liquide caloporteur, dans un environnement où du matériel électrique est présent.

Par ailleurs, dans ce raccord connu, les valves principales sont ouvertes par mise en contact de leur extrémité avant respective en cours d'accouplement, afin que les valves principales se repoussent mutuellement vers l'arrière, jusqu'à leur position d'ouverture. Ainsi, pendant l'accouplement, la communication fluidique entre, d'une part, les passages secondaires et, d'autre part, le volume intermédiaire défini par les corps mâle et femelle emmanchés, est obstruée par la mise en contact des extrémités respectives des valves principales. L'abaissement de la pression est donc limité dès que les extrémités des valves principales entrent en contact. La pression restant relativement élevée, elle génère des efforts tendant à s'opposer à l'accouplement du raccord.

L'invention vise à résoudre notamment les inconvénients susmentionnés de l'art antérieur, en proposant un nouveau raccord fluidique dont les fuites à l'accouplement et l'effort d'accouplement sont réduits, même en cas de pression élevée dans l'un des éléments de raccord.

L'invention a pour objet un raccord fluidique, comprenant un élément de raccord mâle et un élément de raccord femelle, chaque élément de raccord comprenant respectivement :
- un corps, définissant, le long d'un axe central longitudinal, un conduit interne comprenant un volume avant, débouchant à l'avant du corps, et une chambre arrière,
- une soupape principale, mobile dans le corps entre une position d'ouverture, dans laquelle un passage principal est ouvert entre la soupape principale et le corps, pour le passage du fluide entre la chambre arrière et le volume avant, et une position de fermeture, dans laquelle une partie obturante de la soupape principale est en butée avant contre le corps et ferme le passage principal,
- un ressort principal, qui rappelle la soupape principale vers sa position de fermeture,
- une soupape de sécurité, mobile par rapport à la soupape principale entre une position de fermeture et une position d'ouverture d'un passage secondaire, ménagé à travers la soupape principale, entre la chambre arrière et le volume avant,
- un ressort secondaire, qui est en appui sur la soupape de sécurité et sur la soupape principale et qui rappelle la soupape de sécurité vers sa position de fermeture en butée avant contre la soupape principale, et
- un poussoir, mobile dans la soupape principale entre une configuration avancée, dans laquelle la soupape de sécurité est en position de fermeture, et une configuration reculée, dans laquelle le poussoir déplace la soupape de sécurité en position d'ouverture,
le raccord fluidique étant configuré pour évoluer entre :
- une configuration désaccouplée, dans laquelle les corps des éléments de raccord mâle et femelle sont séparés l'un de l'autre et les soupapes principales et de sécurité des deux éléments de raccord sont en position de fermeture, et
- une configuration accouplée, dans laquelle le volume avant de l'élément de raccord femelle reçoit une partie avant du corps de l'élément de raccord mâle en emmanchement et les soupapes principales sont en position d'ouverture.

L'un parmi l'élément de raccord mâle et l'élément de raccord femelle comprend au moins un joint d'étanchéité qui coopère avec le corps de l'élément de raccord femelle et avec le corps de l'élément de raccord mâle en configuration accouplée.

Lors d'un passage de la configuration désaccouplée à la configuration accouplée, les poussoirs viennent axialement en contact l'un contre l'autre et chaque poussoir déplace la soupape de sécurité associée en position d'ouverture, alors que la soupape principale associée est en position de fermeture.

Selon l'invention, le raccord fluidique est configuré pour que, lors d'un passage de la configuration désaccouplée à la configuration accouplée :
- ledit au moins un joint d'étanchéité coopère avec le corps de l'élément de raccord femelle et avec le corps de l'élément de raccord mâle, avant que les soupapes de sécurité des deux éléments de raccord ne soient déplacées vers leur position d'ouverture, et
- pour au moins l'un des éléments de raccord, le poussoir repousse la soupape principale associée vers sa position d'ouverture, une fois que la soupape de sécurité associée est en position d'ouverture.

Grâce à l'invention, le fait que, pour au moins l'un des éléments de raccord, la soupape principale est repoussée vers sa position d'ouverture par le poussoir, on assure que la soupape de sécurité est passée en position d'ouverture et reste en position d'ouverture à l'ouverture de la soupape principale et à l'ouverture de l'autre soupape de sécurité, lors du passage de la configuration désaccouplée à la configuration accouplée. Via chaque passage secondaire, une communication fluidique est assurée entre, d'une part, chaque chambre arrière et, d'autre part, un volume intermédiaire défini par le corps de l'élément de raccord femelle et le volume avant de l'élément de raccord mâle. Cela permet un abaissement rapide de la pression dans la ou les chambres arrières, de sorte que l'effort à fournir pour cet accouplement est diminué. Grâce à l'agencement du joint d'étanchéité, l'étanchéité du volume intermédiaire est maximale en configuration accouplée, et en cours d'accouplement, de façon à limiter tout risque de fuite du fluide transporté.

D'autres caractéristiques optionnelles et avantageuses de l'invention sont définies dans ce qui suit :
- Pour au moins l'un des éléments de raccord:
   ∘ la soupape principale comprend une extension avant, traversée par des ouvertures pour le passage de fluide au niveau du passage principal en position d'ouverture de ladite soupape principale, et
   ∘ le corps dudit élément de raccord comprend une surface radiale interne guidant radialement l'extension avant dans ledit corps.
- Le ressort principal de l'élément de raccord qui comprend l'extension avant est disposé radialement entre le corps dudit élément de raccord et l'extension avant.
- L'extension avant est formée dans l'élément de raccord femelle et l'extension avant est en contact axial avec la partie avant du corps de l'élément de raccord mâle en configuration accouplée.
- Lors d'un passage de la configuration désaccouplée à la configuration accouplée, le poussoir de chaque élément de raccord vient en butée arrière contre la soupape principale associée, et repousse ainsi la soupape principale associée vers sa position d'ouverture.
- Pour au moins l'un des éléments de raccord, le passage secondaire est ouvert entre la chambre arrière et le volume avant pour toute position axiale du poussoir dudit élément de raccord par rapport à la soupape principale associée lorsque ledit poussoir est en configuration reculée.
- Pour chacun des deux éléments de raccord, le poussoir dépasse vers l'avant de la soupape principale associée, quelle que soit la position axiale dudit poussoir par rapport à ladite soupape principale.
- Pour au moins l'un des éléments de raccord, le poussoir est mobile axialement par rapport à la soupape de sécurité associée.
- Au moins une bille, logée à la fois dans une rainure longitudinale de la soupape principale et dans une gorge périphérique du poussoir, forme une butée avant du poussoir contre la soupape principale en configuration avancée du poussoir.
- La soupape de sécurité forme une bille d'obturation du passage secondaire.
- Pour au moins l'un des éléments de raccord, le poussoir et la soupape de sécurité associée sont solidaires axialement.
- Chaque poussoir comprend une surface d'extrémité avant, les surfaces d'extrémité avant des deux poussoirs étant de forme complémentaire et configurées pour coopérer mutuellement, lorsque les poussoirs sont mis en contact l'un contre l'autre lors du passage de la configuration désaccouplée à la configuration accouplée.
- L'une des surfaces d'extrémité avant est convexe et de forme conique centrée sur l'axe central longitudinal de l'élément de raccord auquel ladite surface d'extrémité avant appartient, tandis que l'autre surface d'extrémité avant est concave et de forme conique complémentaire, centrée sur l'axe central longitudinal de l'autre élément de raccord.
- En particulier, les angles au sommet des surfaces d'extrémité avant coniques sont préférentiellement égaux.
- Pour au moins l'un des éléments de raccord :
   ∘ la soupape principale comprend une tige avant, s'étendant en avant de la partie obturante et logeant le poussoir, la tige avant étant de diamètre réduit comparativement à la partie obturante ; et
   ∘ la longueur dudit poussoir est supérieure à deux fois le diamètre interne du volume avant dudit élément de raccord.
- Pour au moins l'un des éléments de raccord :
   ∘ l'élément de raccord comprend une pièce arrière, solidaire du corps, et comprenant une jupe,
   ∘ le ressort principal dudit élément de raccord est en appui sur la pièce arrière et sur la soupape principale dudit élément de raccord,
   ∘ ladite soupape principale comprend une tige arrière qui s'étend en arrière de la partie obturante et qui est guidée radialement dans la pièce arrière, et
   ∘ la jupe de la pièce arrière est radialement interposée entre ledit ressort principal et le fluide en circulation dans la chambre arrière dudit élément de raccord en configuration accouplée.
- Le corps de l'élément de raccord mâle comprend une surface externe avant cylindrique et une surface externe intermédiaire cylindrique, la surface externe intermédiaire étant décalée vers l'arrière par rapport à la surface externe avant et de diamètre supérieur au diamètre de la surface externe avant ; le corps de l'élément de raccord femelle comprend une surface interne avant cylindrique et une surface interne intermédiaire cylindrique, qui délimitent en partie le volume avant de l'élément de raccord femelle, la surface interne intermédiaire étant décalée vers l'arrière par rapport à la surface interne avant et de diamètre inférieur au diamètre de la surface interne avant ; et en configuration accouplée, la surface externe intermédiaire est emmanchée avec la surface interne avant et la surface externe avant est emmanchée avec la surface interne intermédiaire.

D'autres particularités et avantages de l'invention apparaitront encore dans la description ci-après. Aux dessins annexés, donnés à titre d'exemples non limitatifs :
- la figure 1 est une coupe longitudinale d'un élément de raccord mâle appartenant à un raccord fluidique selon un premier mode de réalisation conforme à l'invention ;
- la figure 2 est une coupe transversale d'un détail de la figure 1, selon un trait de coupe II-II ;
- la figure 3 est un détail de la figure 1 selon le cadre III, montré à plus grande échelle ;
- la figure 4 est une perspective d'un éclaté d'une partie de l'élément de raccord mâle de la figure 1 ;
- la figure 5 est une coupe longitudinale d'un élément de raccord femelle appartenant au raccord fluidique des figures précédentes ;
- la figure 6 est une coupe transversale d'un détail de la figure 5, selon un trait de coupe VI-VI ;
- les figures 7, 8 et 9, sont des coupes longitudinales, dans un même plan, du raccord fluidique des figures précédentes, montrant l'élément de raccord mâle et l'élément de raccord femelle selon trois configuration différentes ; et
- les figures 10 et 11 sont des coupes longitudinales, dans un même plan, d'un raccord fluidique selon un deuxième mode de réalisation conforme à l'invention, montrant le raccord fluidique selon deux configurations différentes.

Pour la suite, on définit par « associé » deux parties d'un même élément de raccord.

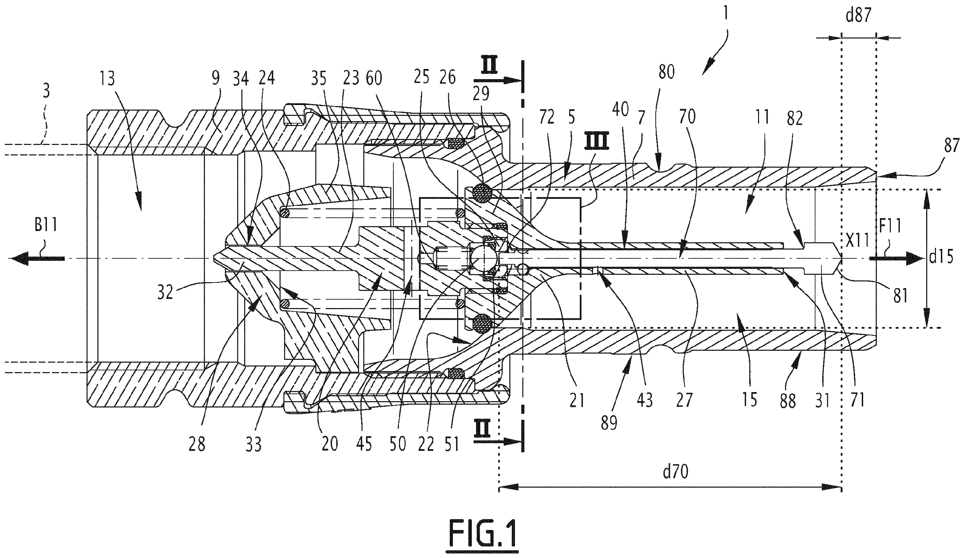

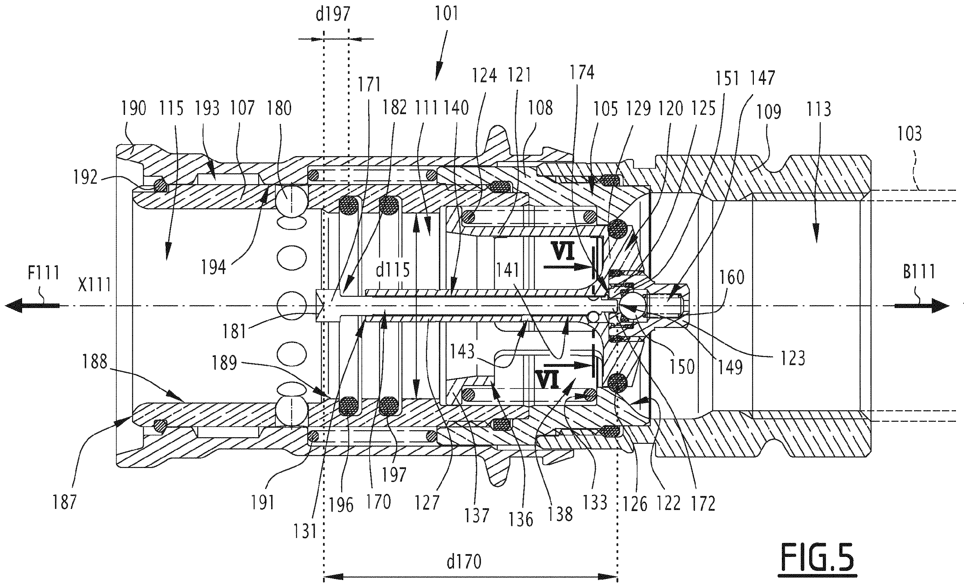

Considérant le premier mode de réalisation illustré aux figures 1 à 9, un raccord fluidique est représenté. Ce raccord fluidique comprend deux éléments de raccord, à savoir un élément de raccord mâle 1, représenté seul sur la figure 1, ainsi qu'un élément de raccord femelle 101, représenté seul sur la figure 5. Les éléments de raccord 1 et 101 sont complémentaires. L'élément de raccord mâle 1 est destiné à être fluidiquement connecté à une extrémité de conduite de fluide 3, illustrée en trait discontinu sur la figure 1. L'élément de raccord femelle 101 est destiné à être fluidiquement connecté à une extrémité de conduite de fluide 103, illustrée en trait discontinu sur la figure 5.

Ce raccord est avantageusement qualifiable de « raccord rapide », et permet d'accoupler fluidiquement, c'est-à-dire raccorder, et de désaccoupler, c'est-à-dire séparer, des extrémités de conduites de fluide 3 et 103, sans outil.

Sur les figures 1 et 5, les éléments de raccord 1 et 101 sont montrés en configuration désaccouplée du raccord, laquelle est obtenue lorsque les éléments de raccord 1 et 101 sont séparés.

Le raccord montré aux figures 1 à 9 est prévu notamment pour le raccordement d'extrémités de conduite d'un fluide sous pression, en particulier un liquide à fonction de caloporteur, comprenant par exemple de l'eau et un additif approprié. Toutefois, d'autres types de fluides peuvent être transportés via le raccord des figures 1 à 9.

La pression du fluide peut atteindre environ 20 bars dans l'une des conduites de fluide 3 et 103, lorsque le raccord est en configuration désaccouplée.

Comme illustré notamment sur la figure 1, l'élément de raccord mâle 1 comprend un corps 5, dit « corps mâle », de forme générale tubulaire. Le corps 5 comprend une partie avant 7 et une partie arrière 9, qui, dans le présent exemple, sont formées respectivement par deux pièces assemblées à l'aide d'un joint d'étanchéité.

Le corps mâle 5 délimite un conduit interne 11 s'étendant le long d'un axe central longitudinal X11 de l'élément de raccord 1. Pour toute caractéristique de l'élément de raccord 1, on désigne par « axial » une direction parallèle à l'axe X11 et par « radial » une direction radiale par rapport à l'axe X11.

L'élément de raccord mâle 1 définit, parallèlement à l'axe X11, une direction avant F11 et une direction arrière B11 opposée à la direction avant F11. La direction F11 est dirigée du côté de la partie avant 7 et la direction B11 du côté de la partie arrière 9. Les expressions « avant » et « arrière », attribuées à toute caractéristique de l'élément de raccord 1, font référence respectivement aux directions F11 et B11.

Le conduit interne 11 traverse le corps 5 de part en part, en débouchant à l'avant et à l'arrière du corps 5. Le conduit interne 11 comprend une chambre arrière 13, débouchant à l'arrière du corps 5. La conduite de fluide 3, reliée à la partie arrière 9, est connectée au débouchant de la chambre arrière 13.

Le conduit 11 comprend un volume avant 15, débouchant à l'avant du corps 5. De préférence, le volume avant 15 est, pour l'essentiel ou la totalité, annulaire et coaxial avec l'axe X11.

Comme expliqué dans ce qui suit, l'élément de raccord 1 comprend deux soupapes, comprenant une soupape principale 20 et une soupape de sécurité 50.

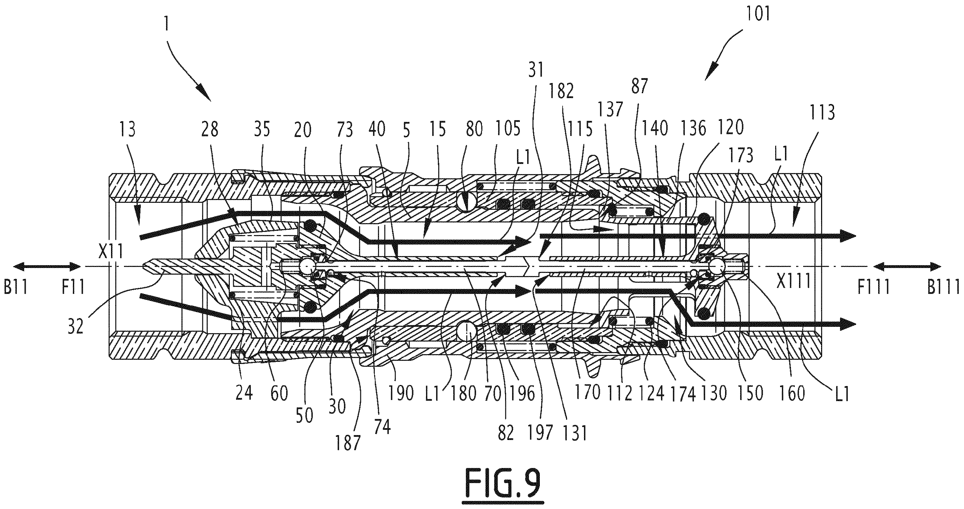

La soupape principale mâle 20 est logée à l'intérieur du conduit 11. La soupape principale 20 est mobile par rapport au corps 5, en translation parallèlement à l'axe X11 entre une position de fermeture, et une position d'ouverture. Sur les figures 1, 7 et 8, la position de fermeture de la soupape principale 20 est illustrée. Sur la figure 9, la position d'ouverture de la soupape principale 20 est illustrée.

En position de fermeture, la soupape principale 20 est en butée axiale, c'est-à-dire en appui parallèlement à l'axe X11, dans la direction F11, contre un siège 22 formé par le corps mâle 5, dans le conduit 11, de façon à obturer la communication de fluide entre la chambre arrière 13 et le volume avant 15 au niveau d'un passage principal 30 entre la soupape principale 20 et le corps 5. Plus généralement, le siège 22 sépare la chambre arrière 13 et le volume avant 15.

En position de fermeture de la soupape principale 20, un joint d'étanchéité 26, par exemple en élastomère, est interposé axialement entre la soupape principale 20 et le corps 5. En particulier, ce joint 26 est logé dans une gorge externe de la soupape principale 20 et coopère axialement avec le corps 5, en particulier son siège 22, en position de fermeture de la soupape principale 20.

La position d'ouverture de la soupape principale 20 est reculée, c'est-à-dire est décalée selon la direction B11, par rapport à sa position de fermeture. En position d'ouverture, la soupape principale 20 est à l'écart du siège 22 dans la direction B11. Comme montré sur la figure 9, en position d'ouverture, le passage principal 30, pour le fluide, est formé entre une partie obturante 29 de la soupape principale 20 et le corps 5. La partie obturante 29 porte le joint 26. En position d'ouverture, la soupape principale 20 autorise ainsi une communication fluidique entre la chambre arrière 13 et le volume avant 15, laquelle se fait au travers du passage principal 30. Le passage principal 30 s'étend autour de la soupape principale 20, en particulier autour de la partie obturante 29, lorsque la soupape principale 20 est en position d'ouverture. En particulier, le passage principal 30 est un passage annulaire formé entre la soupape principale 20 et le siège 22.

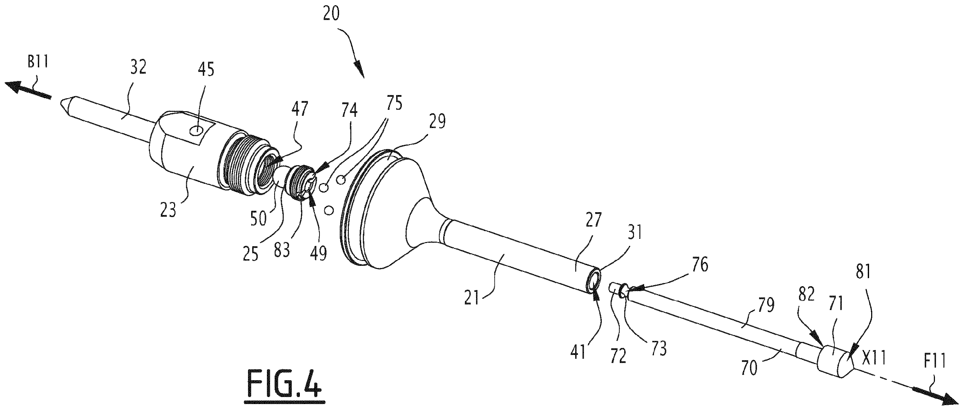

Dans le présent exemple, comme cela est particulièrement visible sur la figure 4, la soupape principale 20 comprend, répartis axialement, un corps principal 21, logeant le joint 26, et un corps arrière 23, situé en direction B11 par rapport au corps 21 et fixement assemblé avec le corps 21, en particulier par vissage du corps 23 dans le corps 21. La partie arrière du corps principal 21 forme la partie obturante 29. La soupape principale 20 du présent exemple comprend en outre un corps intermédiaire 25, étant lui-même fixé à l'intérieur du corps arrière 23, en butée contre le corps arrière 23 selon la direction B11.

En position de fermeture, axialement, le corps principal 21 s'étend essentiellement dans le volume avant 15, en avant du siège 22. Le corps principal 21 comprend une tige avant 27, qui s'étend en avant de la partie obturante 29 et qui est de diamètre extérieur réduit, notamment en comparaison du diamètre extérieur de la partie obturante 29, au niveau du joint d'étanchéité 26. La tige avant 27 est préférentiellement coaxiale avec l'axe central longitudinal X11.

La soupape principale 20 pourrait être formée d'un seul tenant, ou par un assemblage étanche de corps tels que les corps 21, 23 et 25 ou des corps différents, en présentant néanmoins la tige avant 27, la partie obturante 29, et toute autre caractéristique présentement décrite.

L'élément de raccord 1 comprend un ressort principal 24 mécanique, qui repousse la soupape principale 20 contre le siège 22, c'est-à-dire en position de fermeture, dans la direction F11. Le ressort principal 24 est préférentiellement un ressort de compression hélicoïdal, coaxial avec l'axe X11. Le ressort principal 24 exerce une force de rappel élastique, parallèle à l'axe X11, sur la soupape principale 20, tendant à repousser la soupape principale 20 dans la direction F11 par rapport au corps 5.

Pour cela, le ressort principal 24 est avantageusement disposé à l'arrière de la soupape principale 20 de façon à prendre appui sur la soupape principale 20 dans la direction F11. Le ressort principal 24 prend aussi appui sur le corps 5 en direction B11, en particulier contre une pièce arrière 28 de l'élément de raccord 1, solidaire du corps 5, en particulier dans la direction B11 et dans la direction radiale, et disposée à l'intérieur de la chambre arrière 13. Plus précisément, l'appui du ressort principal 24 est effectué contre une surface axiale 33 de la pièce arrière 28, tournée en direction F11 et la pièce arrière 28 est repoussée par le ressort principal 24 en butée contre le corps 5 dans la direction B11.

De préférence, la soupape principale 20 forme une tige arrière 32 qui s'étend à l'arrière de la partie obturante 29. Cette tige arrière 32 est préférentiellement coaxiale à l'axe X11. Dans l'exemple, cette tige arrière 32 est formée par le corps arrière 23. La tige arrière 32 coulisse axialement dans un orifice traversant 34 de la pièce arrière 28. En d'autres termes, la tige arrière 32 est engagée et guidée radialement dans la pièce arrière 28. La tige arrière 32 sert ainsi de guide pour le déplacement de la soupape principale 20 entre sa position d'ouverture et sa position de fermeture.

Le ressort principal 24 entoure avantageusement la tige arrière 32. La surface axiale 33 de la pièce arrière 28, entoure l'orifice 34 de guidage de la tige arrière 32. De préférence, la pièce arrière 28 comprend une jupe 35, ou cloche, coaxiale avec l'axe X11, ouverte en direction avant F11. Dans l'exemple illustré, le fond de la jupe 35, en direction B11, est formé par la surface 33 et percé par l'orifice 34. La jupe 35 est par exemple obtenue par lamage de la pièce 25. En position d'ouverture de la soupape principale 20, la partie obturante 29 de la soupape principale 20 vient en contact, ou est à proximité, du bord libre de la jupe 35, comme visible sur la figure 9. Le ressort principal 24 est alors contenu, au moins pour une partie essentielle, soit de préférence plus de 90% de sa longueur comprimée prise selon l'axe X11, à l'intérieur de la jupe 35, de façon à être protégé. Précisément, le ressort principal 24 est contenu dans un logement délimité non seulement par la jupe 35, mais aussi par la partie obturante 29, rapportée contre ou à proximité de la jupe 35. Plus généralement, en configuration accouplée, la pièce arrière 28 est radialement interposée entre le ressort principal 24 et le fluide en circulation dans la chambre arrière 13, afin de protéger le ressort principal 24 du flux de fluide traversant axialement le conduit 11. Ainsi, la durée de vie du ressort principal 24 est considérablement augmentée.

La soupape principale 20 délimite un passage secondaire 40, qui traverse la soupape principale 20. Le passage secondaire 40 débouche d'une part dans la chambre arrière 13 et d'autre part dans le volume avant 15, de façon à les relier fluidiquement, lorsque le passage secondaire 40 n'est pas obturé.

La tige avant 27 est évidée en son centre, c'est-à-dire qu'elle est tubulaire. Cet évidement forme une sous-partie axiale 41 du passage secondaire 40. La sous-partie axiale 41 est coaxiale avec l'axe X11, et débouche axialement, dans la direction F11, à une extrémité avant 31 de la tige avant 27, dans le volume avant 15.

De préférence, l'évidement de la tige avant 27 comprend également une partie radiale 43 du passage secondaire 40, qui débouche dans le volume avant 15 selon une direction radiale, via un orifice débouchant au niveau d'une paroi externe radiale de la tige avant 27. Cette partie radiale 43 est située entre l'extrémité avant 31 et la partie obturante 29.

Le corps arrière 23 comprend un évidement qui forme une partie arrière du passage secondaire 40 débouchant dans la chambre arrière 13 en position de fermeture de la soupape principale 20. Ici, l'évidement du corps arrière 23 forme deux parties radiales 45 du passage secondaire 40, débouchant chacune dans la chambre arrière 13 au niveau d'une paroi radiale externe du corps arrière 23. L'évidement de la partie arrière forme également une sous-partie axiale 47 du passage secondaire 40, préférentiellement coaxiale avec l'axe X11. La sous-partie axiale 47 est connectée fluidiquement, en direction B11, aux parties radiales 45, et débouche, en direction F11, dans une sous-partie axiale 49 du passage secondaire 40, formée par le corps intermédiaire 25. Pour cela, le corps intermédiaire 25 est de forme tubulaire, notamment coaxiale à l'axe X11.

Ici, la sous-partie axiale 41 du passage secondaire 40 débouche également, dans la direction B11, dans la sous-partie axiale 49 du corps intermédiaire 25.

La soupape de sécurité 50 est logée dans le passage secondaire 40 de la soupape principale 20, en particulier dans les sous-parties 47 et 49.

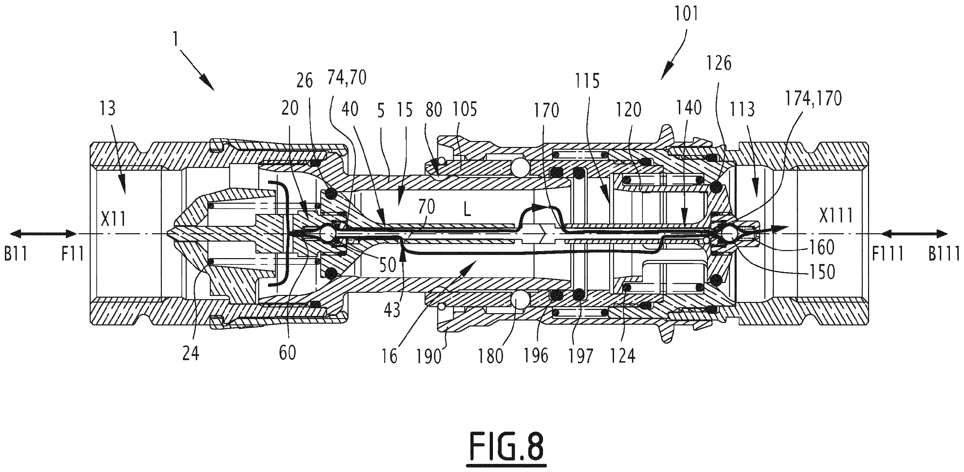

La soupape de sécurité 50 est mobile dans le passage secondaire 40 parallèlement à l'axe X11 et par rapport à la soupape principale 20 entre une position de fermeture et une position d'ouverture. La position de fermeture est illustrée sur les figures 1, 3 et 7. La position d'ouverture est illustrée sur les figures 8 et 9.

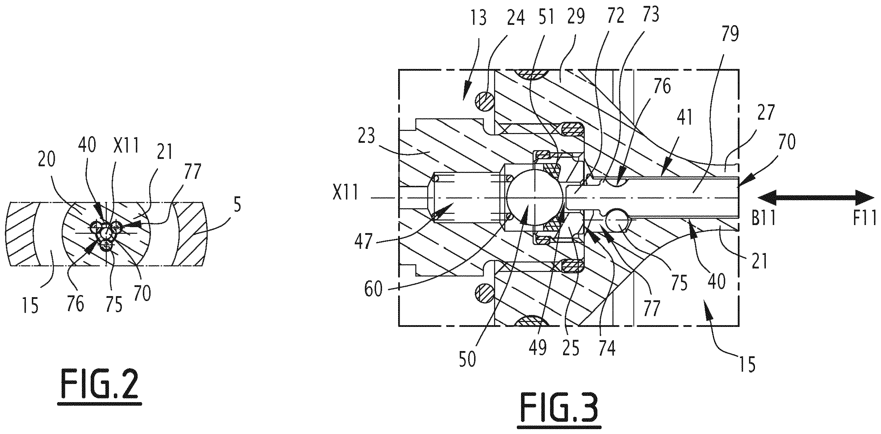

Comme cela est particulièrement visible sur la figure 3, en position de fermeture, la soupape de sécurité 50 est en butée axiale dans la direction F11 contre un siège interne 51 appartenant à la soupape principale 20. En position de fermeture, la soupape de sécurité 50 coopère avec le siège 51 pour obturer le passage secondaire 40 et ainsi empêcher le passage de fluide au travers du passage secondaire 40, entre la chambre arrière 13 et le volume avant 15.

La soupape de sécurité 50 se présente préférentiellement sous la forme d'une bille, c'est-à-dire un élément sphérique plein, comme illustré aux figures 1, 3 et 7-9. Le siège interne 51 est préférentiellement formé par une garniture d'étanchéité, par exemple conique, qui peut se présenter sous la forme d'un joint élastomère. Cette garniture d'étanchéité est attachée au corps intermédiaire 25 de la soupape principale 20. En position de fermeture, la bille de la soupape de sécurité 50 coopère avec la garniture d'étanchéité pour obturer le passage secondaire 40.

La position d'ouverture de la soupape de sécurité 50 est reculée, c'est-à-dire décalée selon la direction B11, par rapport à sa position de fermeture. En position d'ouverture, la soupape de sécurité 50 est à l'écart du siège 51 dans la direction B11 pour autoriser la circulation de fluide au travers du passage secondaire 40. Le fluide franchit la soupape de sécurité 50 en circulant radialement autour de la soupape de sécurité 50.

L'élément de raccord 1 comprend un ressort secondaire 60 mécanique, qui rappelle la soupape de sécurité 50 contre le siège 51, c'est-à-dire vers sa position de fermeture, dans la direction F11 par rapport à la soupape principale 20. Le ressort secondaire 60 est préférentiellement un ressort hélicoïdal de compression, coaxial avec l'axe X11.

Pour cela, le ressort secondaire 60 est avantageusement disposé à l'arrière de la soupape de sécurité 50 de façon à prendre appui sur la soupape de sécurité 50 dans la direction F11. Le ressort secondaire 60 prend aussi appui sur la soupape principale 20 en direction B11, en particulier contre une surface axiale du corps arrière 23 prévue dans le passage secondaire 40. L'effort élastique développé par le ressort secondaire 60 est avantageusement inférieur à l'effort élastique développé par le ressort principal 24. La différence d'effort élastique des ressorts principal 24 et secondaire 60 contribue à assurer que les soupapes de sécurité 50 et principale 20 sont passées en position d'ouverture séquentiellement dans l'ordre souhaité.

L'élément de raccord 1 comprend également un poussoir 70. Dans le présent exemple le poussoir 70 présente la forme d'une tige pleine.

Le poussoir 70 est monté essentiellement à l'intérieur de la soupape principale 20. En particulier, le poussoir 70 est monté en partie dans le passage secondaire 40. Plus précisément, le poussoir 70 est reçu à l'intérieur de la tige avant 27, qui enveloppe le poussoir 70 à la façon d'une manche. En particulier, le poussoir 70 est reçu dans la sous-partie axiale 41 du passage secondaire 40, sur toute la longueur de la sous-partie axiale 41. Une extrémité avant 71 du poussoir 70 dépasse de l'extrémité avant 31 selon la direction F11. Une extrémité arrière 72 du poussoir 70 dépasse jusque dans la sous-partie 49 selon la direction B11.

Le poussoir 70 est mobile par rapport au corps 5, par rapport à la soupape principale 20 associée, et par rapport à la soupape de sécurité 50 associée, parallèlement à l'axe X11.

En particulier, la tige avant 27 sert de guide au coulissement axial du poussoir 70 dans la soupape principale 20. Comme visible sur la figure 3, le poussoir 70 comprend une portion avant 79. La portion avant 79 et l'extrémité arrière 72 sont avantageusement de forme cylindrique à base circulaire. De préférence, le diamètre extérieur de l'extrémité arrière 72 est inférieur au diamètre extérieur de la portion 79. De préférence, la tige avant 27, de forme correspondante avec la portion avant 79, enveloppe la portion avant 79 avec un jeu radial le plus réduit possible, mais qui autorise néanmoins une circulation de fluide le long du poussoir 70, au sein de la sous-partie 41, entre la sous-partie axiale 49 et le volume avant 15 de sorte que le poussoir 70, en soi, n'obture pas la communication entre la chambre arrière 13 et le volume avant 15. Du fluide, circulant le long du poussoir 70, notamment de la portion avant 79, peut traverser la partie radiale 43 du passage secondaire 40, ou l'extrémité avant 31.

De préférence, comme montré notamment sur les figures 2 et 3, l'élément de raccord 1 comprend trois billes 75 de guidage du coulissement du poussoir 70 dans la soupape principale 20. Une gorge périphérique 76 du poussoir 70, à proximité de l'extrémité arrière 72, reçoit les trois billes 75, En prise dans la gorge périphérique 76, les billes 75 sont axialement solidaires du poussoir 70. Chaque bille 75 est par ailleurs reçue dans une rainure longitudinale 77 respective ménagée dans le corps principal 21 à l'extrémité arrière de la sous-partie axiale 41 du passage secondaire 40 de la soupape principale 20. Chacune des billes 75 est en prise avec l'une des trois rainures 77 de la soupape principale 20 régulièrement réparties autour de l'axe X11. Chaque rainure 77 est borgne en direction F11 et ouverte en direction B11.

Le poussoir 70 est mobile, par rapport à la soupape principale 20, entre une position avancée dans la direction F11, montrée sur les figures 1, 3 et 7, et une position reculée dans la direction B11, montrée sur les figures 8 et 9. Dans son recul entre la position avancée et la position reculée, le poussoir 70 peut atteindre également une position intermédiaire, qui est décrite ci-après. Lorsque le poussoir 70 est reculé par rapport à la position intermédiaire, le poussoir 70 est dit dans une « configuration reculée ». Lorsque le poussoir 70 est positionné de la position intermédiaire (comprise) à la position avancée, le poussoir 70 est dit en « configuration avancée ».

De préférence, pour borner la course du poussoir 70 dans la soupape principale 20 à la position reculée dans la direction B11, comme montré sur les figures 8 et 9, le poussoir 70 vient axialement en butée contre la soupape principale 20. En particulier, un épaulement distal 73 du poussoir 70, formé entre l'extrémité arrière 72 et la portion avant 79, et délimitant l'arrière de la gorge périphérique 76, vient en appui dans la direction B11 contre une surface de butée interne 74 du corps intermédiaire 25 de la soupape principale 20. Ces éléments sont mieux visibles sur les figures 3 et 4.

De préférence, pour borner la course du poussoir 70 dans la soupape principale 20 à la position avancée dans la direction F11, les billes 75 viennent respectivement en butée en direction F11 contre l'extrémité borgne des rainures 77. En d'autres termes, le mouvement de translation du poussoir 70 dans la soupape principale 20 est limité vers l'avant par les trois billes 75 en butée avant contre la soupape principale 20, ces billes 75 peuvant être qualifiées de « billes de butée ». En position avancée, le poussoir 70 est ainsi en butée sur l'avant contre la soupape principale 20.

Comme visible notamment sur la figure 3, en position avancée du poussoir 70, l'extrémité arrière 72 du poussoir 70 est axialement écartée de la soupape de sécurité 50.

En position intermédiaire, non illustrée, le poussoir 70 est en butée arrière contre la soupape de sécurité 50, alors que celle-ci est en position de fermeture, c'est-à-dire en appui contre le siège 51.

Dans la configuration avancée du poussoir 70 et en configuration désaccouplée de l'élément de raccord 1, le poussoir 70 est librement axialement mobile entre la position intermédiaire et la position avancée. En configuration avancée du poussoir 70, la soupape de sécurité 50 est maintenue en position de fermeture par le ressort secondaire 60, contre le siège 51. L'épaulement distal 73 du poussoir 70 est écarté de la surface de butée interne 74 de la soupape principale 20.

Dans la configuration reculée du poussoir 70, l'extrémité arrière 72 du poussoir 70 est en butée arrière contre la soupape de sécurité 50, laquelle se trouve alors interposée entre l'extrémité 72 et le ressort secondaire 60. Par conséquent, depuis la position intermédiaire vers la position reculée du poussoir 70, le poussoir 70 et la soupape de sécurité 50 sont liés en position axiale. En effet, le ressort secondaire 60 maintient la soupape de sécurité 50 au contact axial du poussoir 70. Lorsque le poussoir 70 est déplacé en direction B11, dès que le poussoir 70 atteint la position intermédiaire, il entre en contact avec la soupape de sécurité 50 et la déplace en position d'ouverture, c'est-à-dire l'écarte du siège 51. En poursuivant le déplacement du poussoir 70 en direction B11, la soupape de sécurité 50 est davantage éloignée du siège 51, de sorte que l'ouverture du passage secondaire 40 est maximale. En d'autres termes, quelle que soit la position du poussoir 70 par rapport à la soupape principale 20 le long de l'axe X11 lorsque le poussoir 70 est en configuration reculée, la soupape de sécurité 50 garde ouvert le passage secondaire 40 entre la chambre arrière 13 et le volume avant 15.

L'extrémité avant 71 s'étend par-delà l'extrémité avant 31 selon la direction F11, quelle que soit la position relative du poussoir 70 par rapport à la soupape principale 20, en particulier, même si le poussoir 70 est en position reculée.

Comme illustré sur les figures, l'extrémité avant 71 forme une surface d'extrémité avant 81 en relief, qui est préférentiellement convexe et de forme conique, centrée sur l'axe X11. Par exemple, l'angle au sommet du cône est d'environ 120°. A l'opposé de la surface d'extrémité avant 81, c'est-à-dire en direction B11, l'extrémité avant 71 forme un épaulement proximal 82, tourné vers l'arrière. Au moins 75% de la longueur d70 du poussoir 70 est logée dans la soupape principale 20 lorsque le poussoir 70 est en position avancée, c'est à dire en butée sur l'avant contre la soupape principale 20. La longueur du poussoir 70 est mesurée parallèlement à l'axe X11, de l'extrémité avant 71 à l'extrémité arrière 72.

De préférence, la longueur du poussoir 70 est supérieure à deux fois le diamètre interne d15 du conduit interne 11, à hauteur du volume avant 15. Le diamètre interne du volume avant 15 correspond au diamètre interne minimal de la partie avant 7 à l'avant du siège 22.

Le raccord étant en configuration désaccouplée comme montré sur les figures 1 à 3, les soupapes principale 20 et de sécurité 50 sont en position de fermeture et le poussoir 70 est en configuration avancée.

Une distance axiale d87 non nulle est définie entre une face avant 87 du corps mâle 5 et l'extrémité 71 avant du poussoir 70, lorsque le poussoir 70 est en position avancée, et que la soupape principale 20 est en position de fermeture. Cette distance d87 est mesurée parallèlement à l'axe X11. Pour l'extrémité 71, la distance d87 est mesurée sur l'axe central X11. Dans cette configuration désaccouplée, en position avancée, le poussoir 70 est alors en retrait de la face avant 87 du corps mâle 5, c'est-à-dire que l'extrémité 71 est décalée dans la direction B11 par rapport à la face avant 87.

Le corps 5 comprend une surface externe avant 88 et une surface externe intermédiaire 89 cylindriques à base circulaire, coaxiales avec l'axe X11. Les surfaces externes 88 et 89 sont définies sur la partie avant 7 du corps 5. Axialement, la surface externe avant 88 s'étend avantageusement à partir de la face avant 87, et est immédiatement suivie par la surface externe intermédiaire 89, selon la direction B11. De préférence, la surface externe intermédiaire 89 est de diamètre supérieur à celui de la surface externe avant 88.

Le corps 5 présente une gorge périphérique externe 80 de verrouillage, apte à coopérer avec des organes de verrouillage 180 de l'élément de raccord femelle 101, décrits dans ce qui suit. Dans le présent exemple, la gorge périphérique externe 80 est ménagée au niveau de la surface externe intermédiaire 89.

L'élément de raccord femelle 101 présente un fonctionnement essentiellement similaire à celui de l'élément de raccord mâle 1, même si l'élément de raccord femelle 101 diffère de l'élément de raccord mâle 1 dans sa forme, pour un certain nombre d'éléments qui la constitue. Les éléments de l'élément de raccord femelle 101 à fonction ou à géométrie commune avec ceux de l'élément de raccord mâle 1 sont référencés avec le même numéro de référence augmenté de 100 et leur description faite pour l'élément de raccord mâle 1 s'applique pour l'élément de raccord femelle 101 sauf précisions.

Comme illustré notamment sur la figure 5, l'élément de raccord femelle 101 comprend un corps 105, dit « corps femelle », de forme générale tubulaire. Le corps 105 comprend plusieurs parties 107, 108, 109 assemblées avec interposition de joints d'étanchéité distincts.

Le corps femelle 105 délimite un conduit interne 111 s'étendant le long d'un axe central longitudinal X111 de l'élément de raccord 101. Pour toute caractéristique de l'élément de raccord 101, on désigne par « axial » une direction parallèle à l'axe X111 et par « radial » une direction radiale par rapport à l'axe X111.

L'élément de raccord femelle 101 définit, parallèlement à l'axe X111, une direction avant F111 et une direction arrière B111 opposée à la direction avant F111. La direction F11 est dirigée du côté de la partie avant 107 et la direction B11 du côté de la partie arrière 109. Les expressions « avant » et « arrière », attribuées à toute caractéristique de l'élément de raccord 101, font référence respectivement aux directions F111 et B111.

Le conduit interne 111 traverse le corps 105 de part en part, en débouchant à l'avant et à l'arrière du corps 105. Le conduit interne 111 comprend une chambre arrière 113, débouchant à l'arrière du corps 105. L'extrémité 103 de conduite, disposée à l'arrière de l'élément de raccord 101, est connectée au débouchant de la chambre arrière 113, au niveau de la partie arrière 109. Le conduit 111 comprend un volume avant 115, débouchant à l'avant du corps 105. De préférence, le volume avant 115 est, pour l'essentiel ou la totalité, cylindrique à base circulaire et coaxial avec l'axe X11.

Comme expliqué dans ce qui suit, l'élément de raccord 101 comprend deux soupapes, comprenant une soupape principale 120 et une soupape de sécurité 150.

La soupape principale 120 est logée à l'intérieur du conduit 111. La soupape principale 120 est mobile par rapport au corps 105, en translation parallèle à l'axe X111, entre une position de fermeture, et une position d'ouverture. Sur les figures 5, 7 et 8, la position de fermeture de la soupape principale 120 est illustrée. Sur la figure 9, la position d'ouverture de la soupape principale 120 est illustrée.

En position de fermeture, une partie obturante 129 de la soupape principale 120 est en butée axiale, dans la direction B111, contre un siège 122 formé dans le corps 105, de façon à obturer au fluide la communication du conduit 111 entre la chambre arrière 113 et le volume avant 115 au niveau d'un passage principal 130. Plus généralement, le siège 122 sépare la chambre arrière 113 et le volume avant 115.

En position de fermeture de la soupape principale 120, un joint d'étanchéité 126 est interposé axialement entre la soupape principale 120 et le corps 105, plus précisément son siège 122. En particulier, ce joint 126 est logé dans une gorge externe de la partie obturante 129 de la soupape principale 120 et coopère axialement avec le corps 105, en particulier son siège 122, en position de fermeture de la soupape principale 120.

Dans le présent exemple, comme cela est particulièrement visible sur la figure 5, et comme pour la soupape principale 20, la soupape principale 120 comprend plusieurs corps 121, 123, 125, répartis axialement, fixement assemblés par vissage. La soupape principale 150 comprend une tige avant 127, s'étendant à l'avant de la partie obturante 129 et présentant un diamètre extérieur réduit, notamment en comparaison du diamètre de la partie obturante 129. La tige avant 127 est préférentiellement coaxiale avec l'axe X111.

Attachée à la partie obturante 129 et dirigée dans la direction F111, la soupape principale 120 comprend une extension avant 136 de forme tubulaire. L'extension avant 136 forme une cloche percée de plusieurs ouvertures 138 de circulation de fluide. L'extension avant 136 entoure radialement la tige avant 127 et s'étend sur une partie seulement de sa longueur, parallèlement à l'axe X111. Ici, l'extension avant 136 est formée par la même pièce que la partie obturante 129.

La soupape principale 120 pourrait être formée d'un seul tenant, ou par un assemblage de corps différent de celui des corps 121, 123 et 125, en présentant néanmoins la tige avant 127, la partie obturante 129, et toute autre caractéristique présentement décrite.

La position d'ouverture de la soupape principale 120 est reculée, c'est-à-dire est décalée selon la direction B111, par rapport à la position de fermeture. En position d'ouverture, la soupape principale 120 est à l'écart du siège 122 dans la direction B111. Comme montré sur la figure 9, en position d'ouverture, le passage principal 130 pour le fluide, est formé entre la surface externe de la soupape principale 120, en particulier la partie obturante 129, et le corps 105. Le passage principal 130 est formé entre la chambre arrière 113 et le volume avant 115, en particulier à leur frontière axiale. En position d'ouverture, la soupape principale 120 autorise ainsi une communication fluidique entre la chambre arrière 113 et le volume avant 115, laquelle se fait au travers du passage principal 130 et des ouvertures 138.

En position d'ouverture de la soupape principale 120, le fluide peut traverser le conduit 111 de part en part, en circulant au travers du passage principal 130. Par exemple, si du fluide est fourni par l'élément de raccord mâle 1 alors que le raccord est en configuration accouplée, le fluide peut alors circuler selon la direction B111, comme représenté par les flèches L1 sur la figure 9. Dans ce cas, le fluide circule d'abord autour de la tige avant 127, puis s'engouffre, radialement vers l'extérieur, au travers des ouvertures 138 de l'extension avant 136, pour enfin traverser le passage principal 130 ouvert, autour de la partie obturante 129. Lorsque le fluide circule en sens inverse selon la direction F111, un trajet inverse est adopté.

L'élément de raccord 1 comprend un ressort principal 124 mécanique, qui rappelle la soupape principale 120 contre le siège 122, c'est-à-dire en position de fermeture, dans la direction F111. Le ressort principal 124 est préférentiellement un ressort hélicoïdal de compression, coaxial avec l'axe X111. Le ressort principal 124 exerce une force de rappel élastique, parallèle à l'axe X111, sur la soupape principale 120, par rapport au corps 105, repoussant la soupape principale 120 dans la direction F11 par rapport au corps 105.

Pour cela, le ressort principal 124 est avantageusement disposé axialement le long et radialement autour de l'extension avant 136 de la soupape principale 120, de façon à prendre appui sur la soupape principale 120 dans la direction F111, au niveau d'une collerette externe 137 de l'extension avant 136 de la soupape principale 120. Le ressort principal 124 prend aussi appui sur le corps 105 en direction B111. Plus précisément, l'appui du ressort principal 124 est effectué contre une surface axiale 133 du corps 105, tournée en direction F111. Le ressort principal 124 est ainsi logé, relativement étroitement, dans un logement défini par l'extension avant 136, la collerette 137, une surface radiale interne 112 du conduit 111, et la surface 133, de sorte à être protégé de la circulation du fluide dans le raccord, en configuration accouplée du raccord. Plus généralement, le ressort principal 124 est disposé radialement entre le corps 105 et l'extension avant 136.

Dans le présent exemple, la soupape principale femelle 120 est guidée dans sa translation axiale entre les positions d'ouverture et de fermeture par l'extension avant 136, qui coulisse le long de la surface radiale interne 112 du conduit 111. Plus précisément, la collerette externe 137 coopère avec, et est radialement guidée par, la surface radiale interne 112 pour l'obtention de cette translation axiale. La collerette 137 est en contact avec la surface radiale interne 112 à jeu radial réduit. En variante, les caractéristiques de l'élément de raccord femelle 101 concernant la soupape principale 120, notamment en ce qui concerne l'extension avant 136 et le ressort principal 124, peuvent être mises en œuvre pour l'élément de raccord mâle 1, en remplacement de la pièce arrière 28 et du ressort principal 24. De même, les caractéristiques de l'élément de raccord mâle 1 concernant la soupape principale 20, notamment en ce qui concerne la pièce arrière 28 et le ressort principal 24, peuvent être mises en œuvre pour l'élément de raccord femelle 101, en remplacement de l'extension avant 136 et du ressort principal 124.

La soupape principale 120 délimite un passage secondaire 140, pour le fluide, qui traverse la soupape principale 120 de part en part le long de l'axe X111, contrairement à la soupape principale 20 qui comprend les passages radiaux 45. Le passage secondaire 140 débouche d'une part dans la chambre arrière 113 et d'autre part dans le volume avant 115, de façon à les relier fluidiquement, lorsque le passage secondaire 140 n'est pas obturé.

La tige avant 127 est évidée en son centre, c'est-à-dire qu'elle est tubulaire. Cet évidement forme une sous-partie axiale 141 du passage secondaire 140. La sous-partie 141 est coaxiale avec l'axe X111 et débouche, dans la direction F111, à une extrémité avant 131 de la tige avant 127, dans le volume avant 115.

De préférence, l'évidement de la tige avant 127 comprend également une partie radiale 143 du passage secondaire 140, qui débouche dans le volume avant 115 selon une direction radiale, au niveau d'une paroi externe radiale de la tige avant 127.

Ici, l'évidement du corps arrière 123 forme une partie axiale 147 du passage secondaire 140, coaxiale à l'axe X111 et débouchant dans la direction B111 dans la chambre arrière 113. Ici, la sous-partie axiale 141 du passage secondaire 140 débouche également, dans la direction B111, dans la sous-partie axiale 149 du corps intermédiaire 125. La sous-partie 149 relie ainsi fluidiquement les sous-parties 141 et 147 entre elles.

Plus généralement, le passage secondaire 140 comprend une partie axiale, coaxiale avec l'axe X111, qui s'étend à partir de l'extrémité avant 131 jusqu'à l'extrémité axiale opposée de la soupape principale 120, à l'arrière de la partie obturante 129. Le passage secondaire 140 débouche également dans le volume avant 115, via la partie 143.

La soupape de sécurité 150 est logée dans le passage secondaire 140 de la soupape principale 120. Son fonctionnement est essentiellement identique à celui de la soupape de sécurité 50 de l'élément de raccord mâle 1.

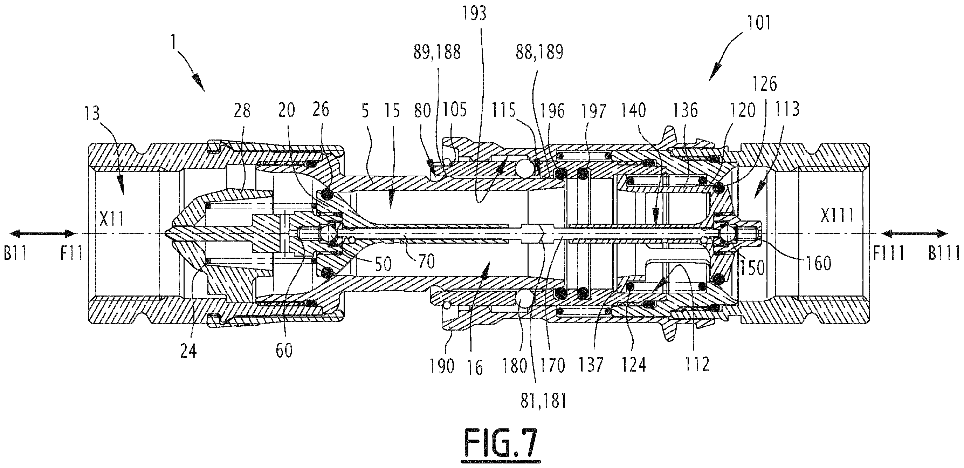

La soupape de sécurité 150 est mobile dans le passage secondaire 140 parallèlement à l'axe X111 et par rapport à la soupape principale 120 entre une position de fermeture, et une position d'ouverture. La position de fermeture est illustrée sur les figures 5 et 7. La position d'ouverture est illustrée sur les figures 8 et 9.

Comme visible notamment sur la figure 5, en position de fermeture, la soupape de sécurité 150 est en butée axiale dans la direction F111 contre un siège interne 151 appartenant à la soupape principale 120. En position de fermeture, la soupape de sécurité 150 coopère avec le siège 151 pour obturer le passage secondaire 140 et ainsi empêcher le passage de fluide au travers du passage secondaire 140, entre la chambre arrière 113 et le volume avant 115.

La soupape de sécurité 150 se présente préférentiellement sous la forme d'une bille. Le siège interne 151 est préférentiellement formé par une garniture d'étanchéité, par exemple conique, qui peut se présenter sous la forme d'un joint en élastomère. En position de fermeture, la bille de la soupape de sécurité 150 coopère avec la garniture d'étanchéité pour obturer le passage secondaire 140.

En position d'ouverture, la soupape de sécurité 150 est à l'écart du siège 151 dans la direction B111 pour autoriser la circulation de fluide au travers du passage secondaire 140. Dès lors, le fluide circule généralement parallèlement à l'axe X111. Le fluide franchit la soupape de sécurité 150 en circulant autour de la soupape de sécurité 150.

L'élément de raccord 101 comprend un ressort secondaire 160 mécanique, qui rappelle la soupape de sécurité 150 contre le siège 151, c'est-à-dire en position de fermeture, dans la direction F111. Le ressort secondaire 160 est préférentiellement un ressort hélicoïdal de compression, coaxial avec l'axe X111.

Pour cela, le ressort secondaire 160 est avantageusement disposé à l'arrière de la soupape de sécurité 150 de façon à prendre appui sur la soupape de sécurité 150 dans la direction F111. Le ressort secondaire 160 prend aussi appui sur la soupape principale 120 en direction B111, en particulier contre une face axiale prévue dans le passage secondaire 140. L'élément de raccord 101 comprend également un poussoir 170, qui est préférentiellement similaire au poussoir 70. Dans le présent exemple le poussoir 170 présente essentiellement la forme d'une tige pleine. Le poussoir 170 est monté essentiellement à l'intérieur de la soupape principale 120. En particulier, le poussoir 170 est monté dans le passage secondaire 140. Plus précisément, le poussoir 170 est reçu à l'intérieur de la tige avant 127, qui enveloppe le poussoir 170 à la façon d'une manche. Une extrémité avant 171 du poussoir 170 dépasse de l'extrémité 131 selon la direction F111. Le poussoir 170 est mobile par rapport au corps 105, par rapport à la soupape principale 120 associée, et par rapport à la soupape de sécurité 150 associée parallèlement à l'axe X111.

En particulier, la tige avant 127 sert de guide du coulissement axial du poussoir 170. Le poussoir présente la même géométrie que le poussoir 70, excepté pour la surface d'extrémité avant 181. De préférence, la soupape principale 120 enveloppe le poussoir 170 avec un jeu radial le plus réduit possible, mais qui autorise néanmoins une circulation de fluide le long du poussoir 170, au sein de la soupape principale 120, de sorte que le poussoir 170, en soi, n'obture pas la communication entre la chambre arrière 113 et le volume avant 115. Du fluide, circulant le long du poussoir 170, peut traverser la partie radiale 143 du passage secondaire 140, ou le passage secondaire 40 au niveau de l'extrémité avant 131.

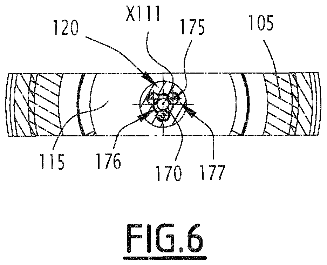

De préférence, comme montré notamment sur les figures 5 et 6, et de manière identique à l'élément de raccord 1, l'élément de raccord 101 comprend trois billes 175 de guidage du coulissement du poussoir 170 dans la soupape principale 120. Une gorge périphérique 176 du poussoir 170, à proximité de l'extrémité 172, reçoit les trois billes 175 En prise dans la gorge 176, les billes 175 sont axialement solidaires du poussoir 170. Chaque bille 175 est par ailleurs reçue dans une rainure longitudinale 177 respective ménagée dans la soupape principale 120. Chacune des billes 175 est en prise avec l'une des trois rainures 177 de la soupape principale 120. Chaque rainure 177 est borgne en direction F111 et préférentiellement ouverte en direction B111.

Guidé en coulissement axial par la soupape principale 120, le poussoir 170 est mobile, par rapport à la soupape principale 120, entre une position avancée dans la direction F111, montrée sur les figures 5 et 7, et une position reculée dans la direction B111, montrée sur les figures 8 et 9. Entre la position avancée et la position reculée, le poussoir 170 peut atteindre également une position intermédiaire, qui est décrite ci-après, comme le poussoir 70. Lorsque le poussoir 170 est positionné entre la position reculée et la position intermédiaire (non comprise), le poussoir 170 est dit dans une « configuration reculée ». Lorsque le poussoir 170 est positionné entre la position intermédiaire (comprise) et la position avancée, le poussoir 170 est dit en « configuration avancée ».

De préférence, en position reculée du poussoir 170 dans la direction B111, comme montré sur les figures 8 et 9, le poussoir 170 est en butée arrière contre une surface de butée interne 174 de la soupape principale 120. En particulier, un épaulement distal 173 du poussoir 170 vient en appui dans la direction B111 contre la surface de butée 174 de la soupape principale 120

De préférence, pour borner la course du poussoir 170 à la position avancée dans la direction F111, les billes 175 viennent respectivement en butée en direction F111 contre la partie borgne des rainures 177. En position avancée, le poussoir 170 est en butée sur l'avant contre la soupape principale 120 par l'intermédiaire des billes de butée 175.

En position intermédiaire, non illustrée, le poussoir 170 est en butée dans la direction B111 contre la soupape de sécurité 150, alors que celle-ci est en position de fermeture, c'est-à-dire en appui contre le siège 151.

En position avancée du poussoir 170, l'extrémité arrière 172 du poussoir 70 est axialement écartée de la soupape de sécurité 150. En configuration avancée du poussoir 170, la soupape de sécurité 150 est maintenue en position de fermeture par le ressort secondaire 160, contre le siège 151 et l'épaulement distal 173 du poussoir 170 est écarté de la surface de butée interne 174 de la soupape principale 120. Dans la configuration avancée, le poussoir 170 est librement axialement mobile entre la position intermédiaire et la position avancée. Sur cette plage de mouvement du poussoir 170 qu'est la configuration avancée, le poussoir 170 autorise la soupape de sécurité 150 à être en position de fermeture.

Pour l'autre partie de la course de mouvement axial du poussoir 170 dans la soupape principale 120, à savoir la configuration reculée, l'extrémité arrière 172 du poussoir 170 est en appui axial contre la soupape de sécurité 150, laquelle se trouve alors interposée entre l'extrémité 172 et le ressort secondaire 160. Par conséquent, dans cette partie de la course du poussoir 170, le poussoir 170 et la soupape de sécurité 150 sont liés en position axiale. En effet, le ressort secondaire 160 maintient la soupape de sécurité 150 au contact axial du poussoir 170. En configuration reculée, le poussoir 170 est apte à entraîner la soupape de sécurité 150 dans son mouvement axial vers l'arrière. Lorsque le poussoir 170 est déplacé en direction B11, dès que le poussoir 170 atteint la position intermédiaire, il entre en contact avec la soupape de sécurité 150 de sorte à la faire passer en position d'ouverture, c'est-à-dire à l'écarter du siège 151. En poursuivant le déplacement du poussoir 170 en direction B111, la soupape de sécurité 150 est davantage éloignée du siège 151, de sorte que l'ouverture du passage secondaire 140 est maximale. En d'autres termes, lorsque le poussoir 170 est en configuration reculée, la soupape de sécurité 150 garde ouvert le passage secondaire 140 entre la chambre arrière 113 et le volume avant 115, quelle que soit la position du poussoir 170 par rapport à la soupape principale 120, le long de l'axe X111 entre les positions reculée et intermédiaire.

L'extrémité avant 171 s'étend par-delà l'extrémité avant 131 selon la direction F111, quelle que soit la position relative du poussoir 170 par rapport à la soupape principale 120. En particulier, l'extrémité avant 171 du poussoir 170 dépasse vers l'avant de la soupape principale 120, que le poussoir 170 soit en configuration avancée ou en configuration reculée, même si le poussoir 170 est en position reculée.

Comme illustré sur les figures, l'extrémité avant 171 forme une surface d'extrémité avant 181 en creux, qui est préférentiellement concave et de forme conique, centrée sur l'axe X111. Par exemple, l'angle au sommet du cône est égal à celui de la surface d'extrémité avant 81, soit 120°. Les formes en relief et en creux respectives des surface d'extrémité avant 81 et 181 sont géométriquement complémentaire pour former un contact autocentré sur l'axe X11 et X111 lors d'une mise en contact axiale des poussoirs 70 et 170 lors de l'accouplement et en configuration accouplée, comme montré sur les figures 7 à 9. En variante, d'autres formes que conique, et des formes en creux et en relief inversées entre les deux poussoirs 70 et 170, peuvent être choisies.

A l'opposé de la surface d'extrémité avant 181, c'est-à-dire en direction B111, l'extrémité avant 171 forme également un épaulement proximal 182, tourné vers l'arrière. Au moins 75% de la longueur du poussoir 170 est logée dans la soupape principale 120 lorsque le poussoir 170 est en position avancée, c'est à dire en butée sur l'avant contre la soupape principale 120. La longueur du poussoir 170 est mesurée parallèlement à l'axe X111, de l'extrémité avant 171 à l'extrémité arrière 172.

De préférence, la longueur d170 du poussoir 170 est supérieure à deux fois le diamètre interne d115 du conduit interne 111, à hauteur du volume avant 115. Le diamètre interne du volume avant 115 est le diamètre minimal de la paroi radiale interne du corps 105 à l'avant de la partie obturante 129.

Le raccord étant en configuration désaccouplée comme montré sur la figure 5, les soupapes 120 et 150 sont en position de fermeture et le poussoir 170 est en configuration avancée.

Dans cette configuration désaccouplée, le poussoir 170 est alors en retrait de la face avant 187 du corps femelle 105, c'est-à-dire que l'extrémité 171 est décalée dans la direction B111 par rapport à la face avant 187.

Le corps 105 comprend une surface interne avant 188 et une surface interne intermédiaire 189 cylindriques à base circulaire, coaxiales avec l'axe X111. La surface interne intermédiaire 189 est avantageusement adjacente à la surface radiale interne 112. Les surfaces internes 188 et 189 délimitent en partie le volume avant 115. Axialement, la surface interne avant 188 s'étend avantageusement à partir de la face avant 187, et est immédiatement suivie par la surface interne intermédiaire 189, selon la direction B111, la surface radiale interne 112 étant axialement située entre la surface interne intermédiaire 189 et le siège 122. De préférence, la surface interne intermédiaire 189 est de diamètre inférieur à celui de la surface interne avant 188.

On prévoit une garniture d'étanchéité, qui ici comprend un joint d'étanchéité dit « proximal » 196 et un joint d'étanchéité dit « distal » 197. Les joints 196 et 197 sont respectivement disposés dans deux gorges périphériques internes formées sur la surface interne intermédiaire 189. Ces deux joints 196 et 197 sont axialement parallèles. Plus généralement, la garniture d'étanchéité comprend un nombre de joints d'étanchéité parallèles supérieur ou égal à un, à savoir au moins un joint d'étanchéité 196. En variante, cette garniture d'étanchéité pourrait être prévue en surface externe du corps mâle 5, notamment sur l'une des surfaces externes 88 ou 89.

En configuration désaccouplée, lorsque le poussoir 170 est en position avancée, l'extrémité avant 171 de celui-ci, est à une distance axiale d197 de la garniture d'étanchéité, plus précisément, du joint d'étanchéité proximal 196, ou avantageusement du joint d'étanchéité le plus en avant de la garniture d'étanchéité, si un nombre de joints supérieur à deux est prévu. Pour l'extrémité 171, la distance d197 est mesurée sur l'axe central X111. L'extrémité avant 171 est en avant du joint d'étanchéité 196.

La partie avant 107 du corps femelle 105 loge les billes de verrouillage 180, qui sont mobiles entre une position radiale interne de verrouillage, montrée sur les figures 5 et 9, dans laquelle les billes de verrouillage 180 dépassent partiellement dans le volume avant 115, et une position radiale externe de déverrouillage, où les billes de verrouillage sont rétractées hors du volume avant 115.

Une bague de verrouillage 190 entoure le corps femelle 105. La bague 190 est axialement mobile entre une position avancée, montrée aux figures 5 et 9, dans laquelle elle maintient les billes de verrouillage 180 en position radiale interne de verrouillage, et une position axialement reculée, montrée aux figures 7 et 8, dans laquelle elle autorise les billes de verrouillage 180 à adopter leur position radiale externe de déverrouillage. Un ressort 191, interposé entre le corps femelle 105 et la bague de verrouillage 190, représenté schématiquement, exerce une force de rappel élastique de la bague de verrouillage 190 vers la position avancée, en butée contre un segment d'arrêt 192, solidaire du corps femelle 105. Dans la position reculée à l'encontre de ce ressort 191, un logement interne 193 de la bague de verrouillage 190 fait face aux billes de verrouillage 180 pour leur permettre de se déplacer en position de déverrouillage, alors qu'en position avancée, un épaulement interne 194 de la bague 190, adjacent au logement 193, maintient les billes de verrouillage 180 en position radiale interne de verrouillage et empêche les billes de verrouillage 180 d'adopter la position de déverrouillage.

Pour passer de la configuration désaccouplée montrée aux figures 1 et 5, à la configuration accouplée montrée sur la figure 9, on aligne et on rapproche les éléments de raccord mâle 1 et femelle 101, pour que les axes X11 et X111 soient coaxiaux, au moins approximativement. La bague de verrouillage 190 est déplacée de sa position avancée à sa position reculée par l'utilisateur, à l'encontre du ressort 191, pour autoriser les billes de verrouillage 180 à adopter leur position radiale externe de déverrouillage, de sorte qu'elles ne forment pas obstacle l'emmanchement du corps mâle 5 dans le corps femelle 105.

Comme montré sur la figure 7, le corps mâle 5 est introduit dans le volume avant 115 du corps femelle 105.

Plus précisément, la surface externe avant 88 s'introduit dans le corps femelle 105 au-delà de la face avant 187, et coulisse axialement d'abord dans la surface interne avant 188, à jeu radial relativement élevé, puis dans la surface interne intermédiaire 189, à jeu radial réduit, comme montré sur les figures 7, 8 et 9. Lorsque la surface externe avant 88 coulisse dans la surface interne intermédiaire 189, la surface externe intermédiaire 89 coulisse dans la surface interne avant 188 également à jeu radial réduit. En configuration accouplée, la surface externe intermédiaire 89 est emmanchée avec la surface interne avant 188 et la surface externe avant 88 est emmanchée avec la surface interne intermédiaire 189. Les axes X11 et X111 sont alors coaxiaux. On obtient donc un double guidage, qui permet à la fois un emmanchement facile, puisque le début de l'emmanchement se fait à jeu radial relativement élevé, et un emmanchement précis, puisque la fin de l'emmanchement se fait à jeu radial réduit, sur une longueur importante des corps 5 et 105.

Le corps mâle 5 repousse les billes de verrouillage 180 vers leur position radiale externe de déverrouillage.

En cours d'accouplement, alors que la configuration accouplée n'est pas encore atteinte, l'étanchéité est prise entre le corps mâle 5 et le corps femelle 105 par l'intermédiaire de la garniture d'étanchéité, comme montré sur la figure 7. En premier, cette étanchéité est prise par le joint proximal 196, qui coopère radialement avec le corps femelle 105 et avec la surface externe avant 88 du corps mâle 5. Les volumes avant 15 et 115 sont alors en communication et débouchent directement l'un dans l'autre pour former ensemble un volume intermédiaire 16 interne aux corps mâle 5 et femelle 105 et étanche vis-à-vis de l'extérieur du raccord. Par « étanche », on entend que la garniture d'étanchéité forme obstacle à la communication fluidique entre le volume intermédiaire 16 et l'extérieur du raccord fluidique. Par extérieur du raccord, on entend un volume disposé autour des corps mâle 5 et femelle 105 en emmanchement, hors des conduites 3 et 103. Comme montré sur la figure 7, le volume intermédiaire 16 est formé et rendu étanche par l'intermédiaire du joint d'étanchéité 196 qui s'interpose entre le volume intermédiaire 16 et l'extérieur du raccord, alors que les soupapes de sécurité 50 et 150, tout comme les soupapes principales 20 et 120, sont toujours en position de fermeture. En particulier, les poussoirs 70 et 170 sont toujours en configuration avancée. Pour cela, on prévoit avantageusement que la distance d87 est strictement supérieure à la distance d197, de sorte que la prise d'étanchéité entre corps mâle 5 et corps femelle 105 se fait avant que les poussoirs 70 et 170 ne se repoussent axialement.

Comme montré sur la figure 7, la poursuite du mouvement d'accouplement provoque l'appui axial de l'extrémité avant 71 du poussoir mâle 70 avec l'extrémité avant 171 du poussoir femelle 170. Grâce à la coopération géométrique mutuelle des surfaces des extrémités 71 et 171, avantageusement coniques, les poussoirs 70 et 170 sont guidés et autocentrés de façon que les poussoirs 70 et 170 s'alignent facilement relativement l'un par rapport à l'autre pour éviter les coincements.

La poursuite du mouvement d'accouplement entraîne les poussoirs 70 et 170 à se repousser mutuellement, le poussoir 70 étant repoussé dans la direction B11 par rapport au corps 5 et le poussoir 170 étant repoussé dans la direction B111 par rapport au corps 105. L'un des poussoirs 70 et 170, puis les deux poussoirs 70 et 170, atteignent respectivement leur position intermédiaire, venant ainsi chacun en contact, via leur extrémité arrière 72 et 172 respective, avec leur soupape de sécurité 50 et 150 respective.

L'une des deux soupapes de sécurité 50 ou 150, pour laquelle le fluide dans la chambre arrière 13 ou 113 associée présente une moindre pression par rapport au fluide dans la chambre arrière de l'autre élément de raccord 1 ou 101, est déplacée la première de son siège 51 ou 151 respectif, vers sa position d'ouverture. Le passage secondaire 40 ou 140 de cette soupape de sécurité 50 ou 150 est alors ouvert, ce qui entraîne une mise en circulation de fluide entre la chambre arrière 13 ou 113, associée à la soupape de sécurité 50 ou 150 ouverte, et le volume intermédiaire 16.

Dans le présent exemple, la pression est plus faible dans la chambre arrière 113 que dans la chambre arrière 13, de sorte que la soupape de sécurité 150 est déplacée en premier vers sa position d'ouverture par le poussoir 170, le poussoir 170 franchissant en premier la position intermédiaire, passant ainsi en configuration reculée. Par conséquent, le passage secondaire 140 est ouvert, alors que le passage secondaire 40 reste fermé à ce stade. Une communication fluidique est donc ouverte entre la chambre arrière 113 et le volume intermédiaire 16 via le passage secondaire 140. Lors de l'ouverture de la soupape de sécurité 150, seul le ressort secondaire 160 est comprimé, et non pas le ressort principal 124, alors que l'effort élastique développé par le ressort secondaire 160 est moins élevé que l'effort élastique du ressort principal 124. La différence d'effort élastique des ressorts principal 124 et secondaire 160 contribue à assurer que les soupapes de sécurité 150 et principale 120 sont passées en position d'ouverture séquentiellement dans l'ordre souhaité.

Si un fluide sous pression est présent dans la chambre arrière 113, le fluide sous pression envahissant le volume intermédiaire 16 étanche en provenance de la chambre arrière femelle 113, la pression de fluide dans la chambre arrière 113 est abaissée. L'accouplement se poursuivant, le poussoir femelle 170 continue de reculer dans la soupape principale femelle 120 et parvient en position reculée, c'est-à-dire en butée arrière contre la soupape principale 120. Pendant cette phase, la face arrière du poussoir mâle 70 est toujours au contact de la soupape de sécurité mâle 50, qui est en position de fermeture.

Le mouvement d'accouplement provoque ensuite l'ouverture de la soupape de sécurité mâle 50, entraînée par le poussoir mâle 70 qui recule dans la soupape principale 20 au-delà de sa position intermédiaire, c'est-à-dire que le poussoir 70 passe en configuration reculée. Cela a pour effet d'ouvrir une communication fluidique entre la chambre arrière 13 et le volume intermédiaire 16, à travers le passage secondaire 40 dans la soupape principale mâle 20, permettant l'abaissement de la pression de fluide dans la chambre arrière 13. Cette situation est illustrée sur la figure 8. Puisque le passage secondaire 140 est ouvert, et si la chambre arrière 113 est reliée à un grand volume à faible pression, le fluide qui s'échappe de la chambre arrière 13 peut également profiter du volume relié à la chambre arrière femelle 113 pour diminuer en pression relativement à la pression initiale dans la chambre arrière 13 en configuration désaccouplée. Le fluide peut alors circuler comme représenté par les flèches L sur la figure 8. Puis le poussoir mâle 70 parvient en position reculée de la configuration reculée, c'est-à-dire en butée arrière contre la soupape principale mâle 20.

Lorsque les poussoirs 70 et 170 sont tous deux en position reculée, ils maintiennent les soupapes de sécurité 50 en position d'ouverture, puisqu'ils sont tous deux en configuration reculée. Puisque les poussoirs 70 et 170 dépassent chacun vers l'avant de leur soupape principale 20 et 120 respective, les faces avant des soupapes principales 20 et 120, en particulier les extrémités avant 31 et 131, restent distantes l'une de l'autre. Ainsi, avant l'ouverture de la soupape principale 20, 120, le passage secondaire 40, 140 respectif est nécessairement ouvert entre la chambre arrière 13, 113 et le volume intermédiaire 16 formé par les volumes avant 15 et 115. En particulier, le fluide peut circuler autour de chaque poussoir 70 et 170 et autour de chaque soupape de sécurité 50 et 150, au travers des soupapes principales 20 et 120. En particulier des rainures transversales 83, visibles sur la figure 4, sont prévues sur la surface de butée 74 du corps intermédiaire 25, pour faciliter cette circulation de fluide au travers du passage secondaire 40 ouvert lorsque le poussoir mâle 70 est en position reculée. Des rainures transversales non visibles aux figures sont formées sur la surface de butée 174 pour le même effet appliqué au passage secondaire 140 ouvert lorsque le poussoir femelle 170 est en position reculée. La pression dans les chambres 13 et 113 étant abaissée, l'effort axial nécessaire pour poursuivre le rapprochement des éléments de raccord mâle 1 et femelle 101 pour l'accouplement et ouvrir les soupapes principales 20 et 120 est réduit. En effet, la pression du fluide dans les chambres 13 et 113 étant diminuée, l'effort de maintien des soupapes principales 20 et 120 en position de fermeture par la pression du fluide est diminué également. Toutefois, si, lorsque les poussoirs parviennent en position reculée, la vitesse du mouvement d'accouplement de l'élément de raccord 1 en direction de l'élément de raccord 101 a été trop rapide et n'a pas permis de suffisamment diminuer la pression dans les chambres arrière 13 et 113, l'effort d'accouplement à fournir reste trop élevé et le rapprochement des corps 5 et 105 peut difficilement être poursuivi. Le fluide sous pression peut cependant continuer à se déverser dans le volume intermédiaire 16, et dans la chambre arrière 13 ou 113 de plus faible pression, via les passages secondaires 40 et 140 non obstrués, jusqu'à ce que l'effort d'accouplement devienne surmontable et que se poursuive l'emmanchement par recul des soupapes principales 20 et 120.

Au stade de la figure 8, les pressions de fluide ayant diminué dans les chambres arrière 13 et 113, il est maintenant possible de repousser les soupapes principales 20 et 120 vers leur position d'ouverture respective. La soupape principale 20 ou 120, rappelée par le ressort principal 24 ou 124 avec la raideur la plus faible, est ouverte en premier. Alors, la circulation de fluide est autorisée entre cette soupape principale 20 ou 120 et le corps 5 ou 105 associé, par le passage principal 30 ou 130 ouvert le premier.

Dans le présent exemple, la soupape principale mâle 20 est repoussée en premier en position d'ouverture, c'est-à-dire avant la soupape principale femelle 120. Dans le déplacement de la soupape principale 20, seul le ressort principal 24 est à comprimer. L'avant du corps mâle 5 prend contact avec le joint distal 197, ce qui assure une étanchéité renforcée. Tant que la force de rappel de la soupape principale mâle 20 exercée par le ressort principal 24 est inférieure à la force de rappel de la soupape principale femelle 120 exercée par le ressort principal 124, la soupape principale mâle 20 est la seule ouverte. Ensuite, la soupape principale 120 est ouverte, dans la pratique, soit à partir d'une certaine compression du ressort principal 24 produisant que la force de rappel élastique des ressorts atteint la même valeur, soit lorsque la face avant 87 du corps mâle arrive en appui axial contre l'extension avant 136 de la soupape principale femelle 120. Dans ce dernier cas, les deux soupapes principales 20 et 120 sont alors déplacées simultanément vers leur position d'ouverture, comme montré sur la figure 9.

La configuration accouplée est atteinte au moins lorsque le volume avant 115 reçoit le corps de l'élément de raccord mâle en emmanchement, de façon étanche grâce à sa garniture d'étanchéité, et que les soupapes principales 20 et 120 sont toutes deux en position d'ouverture.

En position intermédiaire des poussoirs, en position reculée des poussoirs, comme en configuration accouplée du raccord, l'épaulement proximal 82, 182 reste axialement distant de l'extrémité avant 31, 131 de la soupape principale 20, 120 respective.

En cours d'accouplement, lorsque la soupape principale mâle 20 est repoussée vers sa position d'ouverture, son corps arrière 23 s'escamote à l'intérieur de la jupe 35 de la pièce arrière 28.

Pour chaque élément de raccord 1 et 101, en position d'ouverture de la soupape de sécurité 50 ou 150, la section de passage du passage secondaire 40 ou 140 associé est de préférence très inférieure à la section de passage du passage principal 30 ou 130 associé, obtenue en position d'ouverture de la soupape principale 20 ou 120 associée. La circulation de fluide entre les chambres arrière 13 et 113 se fait donc préférentiellement par les passages principaux.

En fin d'accouplement, la face avant 187 du corps femelle 105 parvient en butée axiale contre un épaulement du corps mâle 5.

Les billes de verrouillage 180 parviennent alors en regard de la gorge périphérique externe 80 du corps mâle 5 et s'y engagent, en position radiale interne de verrouillage des billes de verrouillage 180. Cela est préférentiellement obtenu par relâchement de la bague 190, qui reprend sa position avancée sous l'action du ressort 191, ce déplacement de la bague 190 entraînant également les billes de verrouillage 180 dans leur mouvement radial interne. Les billes de verrouillage 180 engagées dans la gorge périphérique externe 80, elles s'opposent alors à un retrait du corps mâle 5 hors du corps femelle 105, c'est-à-dire à un déplacement axial des éléments de raccord 1 et 101 à l'écart l'un de l'autre. Selon la géométrie de la gorge de verrouillage, un léger retrait du corps mâle par rapport au corps femelle peut avoir lieu avant blocage du corps mâle 5 par les billes de verrouillage 180, ainsi qu'illustré en Figure 9. De préférence, la configuration accouplée des deux éléments de raccord est atteinte lorsque ce verrouillage des billes de verrouillage 180 dans la gorge périphérique externe 80 est effectué, de surcroît au fait que la position d'ouverture des soupapes principales 20 et 120 est obtenue.

Pour passer de la configuration accouplée montrée sur la figure 9, à la configuration désaccouplée, montrée aux figures 1 et 5, la bague de verrouillage 190 est d'abord déplacée de sa position avancée à sa position reculée par l'utilisateur, pour permettre aux billes de verrouillage 180 d'adopter leur position radiale externe de déverrouillage.

Le corps femelle 105 peut alors être écarté du corps mâle 5, c'est-à-dire que le corps 5 est déplacé dans la direction B11 alors que le corps femelle est déplacé dans la direction B111, les billes de verrouillage 180 ne s'opposant pas à ce retrait du corps mâle 5 hors du corps femelle 105.

Le retrait du corps mâle 5 est suivi par la fermeture de l'une des soupapes principales 20 ou 120. La soupape principale 20 ou 120 déplacée la première vers la position de fermeture est celle qui est soumise au plus fort rappel élastique par son ressort principal 24 ou 124 respectif. Dans cet exemple, il s'agit de la soupape principale 20. A ce moment-là, les poussoirs 70 et 170 restent en contact axial l'un contre l'autre en configuration reculée. Les soupapes 50 et 150 restent donc toutes deux en position d'ouverture.

On revient alors dans la configuration de la figure 8 décrite ci-avant. Dans cette configuration, les deux soupapes principales 20 et 120 sont en position de fermeture mais les soupapes de sécurité 50 et 150 sont toujours maintenues en position d'ouverture par les poussoirs 70 et 170. Sous l'effet du mouvement d'écartement relatif des corps 5 et 105, les soupapes de sécurité 50 et 150 se referment successivement Les poussoirs 70 et 170 ont été repoussés respectivement par les soupapes de sécurité 50 et 150 en position intermédiaire. On obtient la configuration montrée sur la figure 7 et décrite ci-avant.

Au moins pendant toutes les étapes susmentionnées du désaccouplement des éléments de raccord 1 et 101, le volume intermédiaire 16 formé par les volumes avant 15 et 115 est toujours étanche, grâce à la garniture d'étanchéité incluant le joint d'étanchéité 196. Ainsi le volume intermédiaire 16 est étanche lorsque les passages secondaires 40 et 140 sont fermés par les soupapes de sécurité 50 et 150.

En continuant le mouvement d'écartement mutuel des corps 5 et 105, les poussoirs 70 et 170 quittent leur contact mutuel.

Le corps mâle 5 finit par perdre l'étanchéité avec le corps femelle 105 au niveau du joint proximal 196. Le corps mâle 5 est retiré hors du corps femelle 105, comme montré sur les figures 1 et 5 décrites ci-avant. Dans cette configuration désaccouplée, toutes les soupapes 20, 120, 50 et 150 sont en position de fermeture et les poussoirs 70 et 170 ne sont pas en contact.

En définitive, grâce aux dispositions qui précèdent, le raccord des figures 1 à 9 présente de nombreux avantages.

En particulier, dans toutes les configurations du raccord, la mise en position d'ouverture des soupapes de sécurité 50 et 150 ne peut se produire que si le volume intermédiaire 16 est rendu étanche vis-à-vis de l'extérieur du raccord, sans fuite dans l'environnement. Cela est obtenu notamment grâce à la disposition de la garniture d'étanchéité et des poussoirs dans les corps mâle et femelle. Comme les poussoirs 70 et 170 sont formés respectivement par des pièces séparées vis-à-vis des soupapes 50 et 150, et que les poussoirs 70 et 170 viennent en appui contre les soupapes 50 et 150 seulement à certains moments de l'accouplement et du désaccouplement, ce qui limite les fuites. De plus, un poussoir-soupape de sécurité monobloc est moins tolérant aux défauts de fabrication et plus sujet aux coincements dans la soupape principale, ce qui pourrait conduire à des fuites dans l'environnement du raccord.

En particulier, lors de l'accouplement, lorsque le poussoir 70 ou 170, ou la soupape de sécurité 50 ou 150, repousse sa soupape principale 20 ou 120 respective en position d'ouverture, on garantit que l'ouverture de la soupape de sécurité 50, 150 est effectuée avant l'ouverture de la soupape principale 20 ou 120 respective, pour garantir la chute de pression et donc la diminution de l'effort d'accouplement. Pendant le désaccouplement, la séquence inverse est obtenue.

Pendant l'accouplement, pour l'ouverture des soupapes de sécurité 50 et 150, à pression élevée, il faut repousser les soupapes de sécurité 50 et 150, sur une section d'étanchéité, définie par les diamètres des joints 51, 151, bien inférieure à la section d'étanchéité des passages principaux 30 et 130, définie par les diamètres des joints 26, 126. De préférence, pour chaque élément de raccord 1 et 101, le rapport entre la section d'étanchéité du passage principal et du passage secondaire est supérieur à quatre.

Ensuite, lorsque le poussoir 70 ou 170 repousse la soupape principale 20 ou 120 respective, il est seulement nécessaire que le ressort principal 24 ou 124 soit davantage comprimé, alors que le ressort secondaire 60 ou 160 est déjà comprimé. Les efforts d'accouplement sont donc minimisés.

Puisque les faces avant des soupapes principales 20 et 120 ne viennent pas en contact, dans aucune configuration du raccord, puisqu'on a avantageusement ménagé en outre les parties radiales débouchantes 43 et 143 des passages secondaire 40 et 140, et puisque les poussoirs 70 et 170 n'obstruent pas les passages secondaires 40 et 140, même notamment en position intermédiaire ou encore en configuration reculée, les passages secondaires 40 et 140 restent dégagés pour continuer l'abaissement de pression quelle que soit la vitesse du mouvement d'accouplement.

Les ressorts principaux 24 et 124 sont protégés de la veine fluide en configuration accouplée, ce qui augmente leur durée de vie, en particulier respectivement par la pièce arrière 28 et par l'extension avant 136.

L'engagement du corps mâle 5 dans le corps femelle 105 se fait par un double guidage, grâce à la paire de surfaces externes 88 et 89 et à la paire de surfaces internes 188 et 189. L'emmanchement des corps 5 et 105 se fait donc sans coincement et avec un alignement optimal entre les poussoirs 70 et 170.

En configuration accouplée, le corps mâle 5 est en contact, par sa paroi avant 87, contre l'extension avant 136, ce qui bloque axialement tout mouvement vers l'avant de la soupape principale femelle 120, sous l'effet du débit en configuration accouplée.

La longueur élevée du poussoir 70 et/ou 170, à savoir plus de 2 fois le diamètre interne du conduit 11 ou 111 respectif, assure que le volume intermédiaire 16 étanche est de volume relativement élevé, pour permettre une rapide baisse de pression de la ou des chambres arrière 13 et/ou 113 lors de l'accouplement.

Le raccord peut être utilisé pour des pressions élevées présentes dans la chambre arrière de l'un ou l'autre élément de raccord, ou dans la chambre arrière des deux éléments de raccord, car chacun des deux éléments de raccord est équipé d'un poussoir 70 ou 170 respectif et d'une soupape de sécurité 50 ou 150 respective.

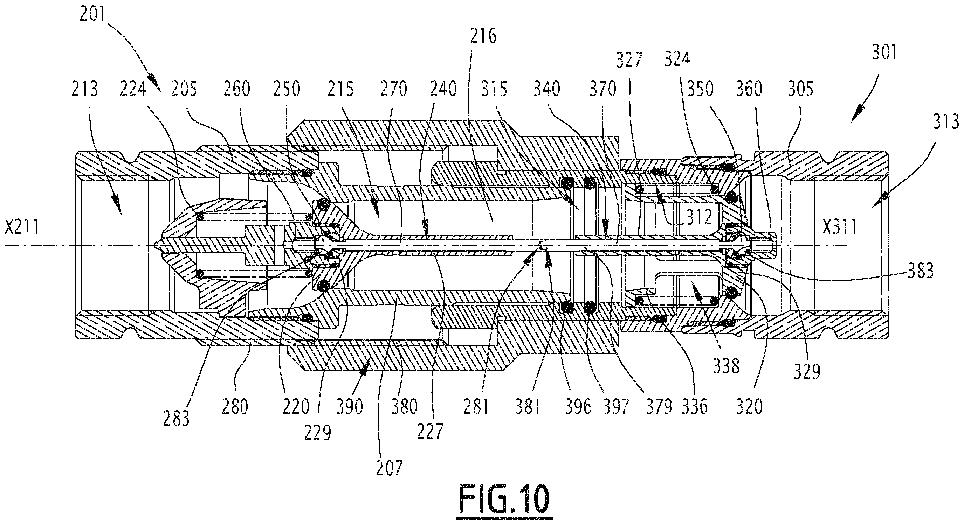

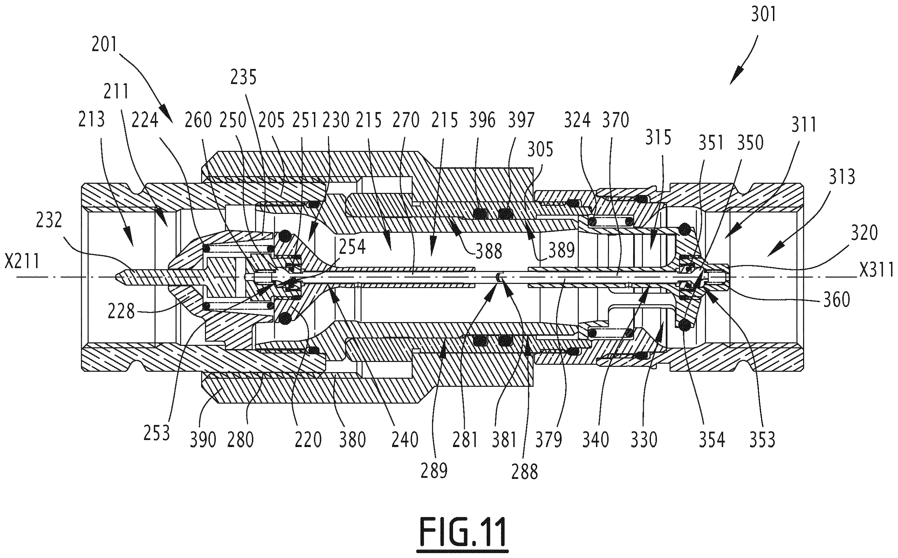

Pour le deuxième mode de réalisation d'un raccord conforme à l'invention illustré sur les figures 10 et 11, de nombreux éléments, désignés avec des références identiques augmentées de 200, un nommage identique dans la présente description et un tracé similaire sur les dessins, sont communs dans leur fonction, voire dans leur structure et leur géométrie, avec les éléments correspondants du mode de réalisation des figures 1 à 9. Ces éléments communs ne sont pas à nouveau décrits en détails, hormis pour leurs différences avec ceux du mode de réalisation des figures 1 à 9. Plus généralement, les principales différences entre les deux modes de réalisation sont décrites ci-dessous. Tout ou partie des différences décrites ci-dessous peuvent être mise en œuvre dans le mode de réalisation des figures 1 à 9.

Comme dans le cas des figures 1 à 9, le raccord des figures 10 et 11 comprend un élément de raccord mâle 201 et un élément de raccord femelle 301. L'élément de raccord 201 comprend un corps 205, définissant un conduit interne 211 le long d'un axe central longitudinal X211, comprenant un volume avant 215 et une chambre arrière 213 internes au corps 205. L'élément de raccord 201 comprend une soupape principale 220, dont une partie obturante 229 obture sélectivement un passage principal 230 du fluide, qui est rappelée par un ressort principal 224 en position de fermeture. La soupape principale 220 comprend également une tige avant 227. L'élément de raccord 201 comprend un poussoir 270 et une soupape de sécurité 250, qui obture sélectivement un passage secondaire 240 à travers la soupape principale 220, et qui est rappelée par un ressort secondaire 260 en position de fermeture. De même, l'élément de raccord 301 comprend un corps 305, définissant un conduit interne 311 le long d'un axe central longitudinal X311, comprenant un volume avant 315 et une chambre arrière 313 internes au corps 305. L'élément de raccord 301 comprend une soupape principale 320, dont une partie obturante 329 obture sélectivement un passage principal 330 du fluide, et qui est rappelée par un ressort principal 324 en position de fermeture. La soupape principale 320 comprend également une tige avant 327. L'élément de raccord 301 comprend un poussoir 370 et une soupape de sécurité 350, qui obture sélectivement un passage secondaire 340 à travers la soupape principale 320, et qui est rappelée par un ressort secondaire 360 en position de fermeture. Une garniture d'étanchéité, comprenant ici deux joints d'étanchéité 396 et 397, est agencée de façon à être interposée entre le corps 305 et le corps 205 pour assurer l'étanchéité du volume intermédiaire 216 formé par la mise en communication fluidique directe des volumes avant 215 et 315, non seulement en configuration accouplée du raccord des figures 10 et 11, mais aussi en cours d'accouplement, pour assurer l'étanchéité du volume intermédiaire 216 avant que l'une des soupapes 220, 320, 250 ou 350 soit en position d'ouverture.

En remplacement de la gorge périphérique externe 80, des billes de verrouillage 180 et de la bague 190, le corps 205 de l'élément de raccord mâle 201 comporte un filetage externe 280 et l'élément de raccord femelle 301 comprend une bague 390 avec un filetage interne 380. La bague 390 est montée, en étant axialement pivotante, autour du corps femelle 305, son filetage 380 pouvant être vissé avec le filetage 280 du corps mâle 205, comme montré sur les figures 10 et 11. Plus généralement, pour être mis en configuration accouplée, les deux éléments de raccord 201 et 301 sont vissés l'un dans l'autre.

De manière encore plus générale, on prévoit que, pour les deux modes de réalisation, le raccord comprend des moyens de verrouillage en configuration accouplée, par exemple dans un cas les éléments 80, 180 et 190, par exemple dans l'autre cas, les éléments 280, 380 et 390.

La soupape de sécurité 250 et le poussoir 270 sont monoblocs, donc solidaires axialement, et la soupape de sécurité 350 et le poussoir 370 sont monoblocs, donc solidaires axialement, au lieu d'être formés par des pièces séparées et mobiles axialement l'une par rapport à l'autre comme pour les figures 1 à 9. Ces deux poussoirs-soupapes de sécurité ont une géométrie générale de révolution. Selon le mode de réalisation des figures 10 et 11, les poussoirs 270 et 370 sont respectivement liés en position axiale avec les soupapes de sécurité 250 et 350, en configuration avancée comme en configuration reculée. En d'autres termes, chaque poussoir-soupape de sécurité évolue, d'un seul tenant, entre la configuration reculée du poussoir, dans laquelle la soupape de sécurité est en position d'ouverture, et la position avancée, qui est la position de fermeture de la soupape de sécurité. En configuration reculée, chaque poussoir 270, 370 déplace ainsi la soupape de sécurité 250, 350 respective en position d'ouverture.

Pour les figures 10 et 11, la position intermédiaire de chaque poussoir 270 et 370 est confondue avec la position avancée. Chaque poussoir 270 et 370 est en configuration avancée seulement en position avancée, qui est également la position intermédiaire, et en configuration reculée pour toutes les autres positions entre la position avancée/intermédiaire (non comprise) et la position reculée. Comme montré sur la figure 10, en position avancée du poussoir-soupape, le poussoir-soupape est en butée avant, par l'intermédiaire de la soupape de sécurité 250 ou 350 associée, contre la soupape principale 220 ou 320 associée. Pour cela, chaque soupape de sécurité 250 et 350 comprend par exemple un épaulement 253 et 353 respectif. Ces épaulements 253 et 353 comprennent respectivement, par exemple, une face avant de géométrie hémisphérique ou tronconique, tournée en direction avant, qui vient en appui contre le siège interne 251 et 351 respectif des soupapes principales 220 et 320.

Comme montré sur la figure 11, pour chaque élément de raccord 201 et 301, en position reculée du poussoir-soupape, le poussoir-soupape 270, 370 est en butée arrière, par l'intermédiaire de la soupape de sécurité 250 ou 350 associée, contre la soupape principale 220 ou 320 associée. Pour cela, par exemple, chacun des épaulements 253 et 353 comprend une face arrière, tournée vers l'arrière de l'élément de raccord 201, 301 respectif, qui entre en butée contre une paroi axiale interne 254, 354 respective, tournée vers l'avant de l'élément de raccord 201, 301 respectif, de la soupape principale 220 ou 320 associée. Chaque paroi axiale interne 254 et 354 est placée en arrière du siège interne 251 et 351 respectif de la soupape principale 220 et 320 associée. Pour éviter que les poussoirs 270 et 370 n'obturent respectivement les passages secondaires 240 ou 340 en position reculée, chaque épaulement arrière 253 et 353 est avantageusement axialement traversé par au moins une rainure longitudinale 283, respectivement 383, qui ne permet cependant pas à la chambre arrière 213, 313 de communiquer avec le volume avant 215, 315, lorsque la soupape de sécurité 250, 350 est en position de fermeture.

La surface d'extrémité avant 281 avant du poussoir 270 forme une cavité cylindro-conique, c'est-à-dire cylindrique à l'avant et conique à l'arrière, la cavité cylindro-conique étant ouverte en direction avant de l'élément de raccord 201. La surface d'extrémité avant 381 du poussoir 370 forme une saillie de centrage cylindro-conique, c'est-à-dire conique vers l'avant, et cylindrique vers l'arrière. La saillie de centrage est de diamètre réduit comparativement à la partie avant 379 du poussoir 370. Lors de leur mise en contact axiale, les deux poussoirs 270 et 370 sont centrés par coopération de la saillie de centrage et de la cavité cylindro-conique.

Pendant l'accouplement, on introduit une partie avant 207 du corps mâle 205 dans le volume avant 315. On vient ensuite prendre l'étanchéité entre le corps mâle 205 et le corps femelle 305, au moins via le joint 396, puis les poussoirs 270, 370 viennent en contact axial, puis la soupape de sécurité 250 ou 350 soumise à l'effort de pression de fluide moindre, depuis sa chambre arrière 213 ou 313 respective, est déplacée vers la position d'ouverture par son poussoir. Contrairement au mode de réalisation des figures 1 à 9, dans le mode de réalisation des figures 10 et 11, dès que les poussoirs 270 et 370 sont centrés et entrent en butée axiale, l'une des soupapes de sécurité 250 et 350 est déplacée vers sa position d'ouverture. Dès son recul, le poussoir 270 ou 370 est en configuration reculée. Ensuite, l'autre soupape de sécurité est déplacée vers la position d'ouverture.

Les soupapes de sécurité 250 et 350 étant respectivement repoussées, en position d'ouverture, en butée arrière contre les soupapes principales 220 et 320, les soupapes principales 220 et 320 sont ensuite entraînées vers leur position d'ouverture pour atteindre la configuration accouplée.

La soupape principale 22 comprend une tige arrière 232, guidée radialement dans une pièce arrière 228 solidaire du corps 205, la pièce arrière 228 comprenant une jupe 235. La soupape principale 320 comprend une extension avant 336, avec des ouvertures 338, une surface radiale interne 312 guidant radialement l'extension avant 336.

Le corps 205 comprend une surface externe avant 288 et une surface externe intermédiaire 289, alors que le corps 305 comprend une surface interne avant 388 et une surface interne intermédiaire 389.

Selon d'autres variantes non illustrées, dont les caractéristiques peuvent modifier l'un ou l'autre des modes de réalisation illustrés décrits ci-avant :
- La soupape de sécurité présente la géométrie cylindrique du mode de réalisation des figures 10 et 11, tout en formant une pièce séparée vis-à-vis du poussoir, comme sur les figures 1 à 9.
- Durant l'accouplement, le poussoir de l'élément de raccord peut repousser la soupape principale de l'élément de raccord, tandis que le corps de l'élément de raccord parvient en butée contre une extension avant de la soupape principale de l'élément de raccord complémentaire, pour repousser la soupape principale de l'élément de raccord complémentaire en position d'ouverture. En d'autres termes, le poussoir de l'élément de raccord complémentaire, selon cette variante, ne repousse pas la soupape principale de l'élément de raccord complémentaire vers sa position d'ouverture.
- Les moyens de verrouillage du raccord en configuration accouplée comprennent un système à baïonnette, ou tout autre organe de verrouillage comme des doigts ou des segments de verrouillage.
- En cours d'accouplement, la soupape de sécurité, distincte du poussoir et déplacée par le poussoir vers sa position d'ouverture, vient en butée arrière contre la soupape principale. Le poussoir repousse alors la soupape principale vers sa position d'ouverture par l'intermédiaire de la soupape de sécurité.
- En cours d'accouplement, la première soupape de sécurité de l'élément de raccord dont la chambre arrière est de moindre pression, est déplacée vers sa position d'ouverture. Si la pression dans l'autre chambre arrière est très élevée, il est possible que la soupape principale associée à la première soupape de sécurité soit ouverte avant l'ouverture de la deuxième soupape de sécurité.

## Revendications

1. Raccord fluidique, comprenant un élément de raccord mâle (1 ; 201) et un élément de raccord femelle (101 ; 301), chaque élément de raccord (1, 101 ; 201, 301) comprenant respectivement :
- un corps (5, 105 ; 205, 305), définissant, le long d'un axe central longitudinal (X11, X111; X211, X311), un conduit interne (11, 111 ; 211, 311) comprenant un volume avant (15, 115 ; 215, 315), débouchant à l'avant du corps (5, 105 ; 205, 305), et une chambre arrière (13, 113 ; 213, 313),
- une soupape principale (20, 120 ; 220, 320), mobile dans le corps (5, 105 ; 205, 305) entre une position d'ouverture, dans laquelle un passage principal (30, 130 ; 230, 330) est ouvert entre la soupape principale (20, 120 ; 220, 320) et le corps, pour le passage du fluide entre la chambre arrière (13, 113 ; 213, 313) et le volume avant (15, 115 ; 215, 315), et une position de fermeture, dans laquelle une partie obturante (29, 129 ; 229, 329) de la soupape principale (20, 120 ; 220, 320) est en butée avant contre le corps (5, 105 ; 205, 305) et ferme le passage principal (30, 130 ; 230, 330),
- un ressort principal (24, 124 ; 224, 324), qui rappelle la soupape principale (20, 120 ; 220, 320) vers sa position de fermeture,
- une soupape de sécurité (50, 150 ; 250, 350), mobile par rapport à la soupape principale entre une position de fermeture et une position d'ouverture d'un passage secondaire (40, 140 ; 240, 340), ménagé à travers la soupape principale (20, 120 ; 220, 320), entre la chambre arrière (13, 113 ; 213, 313) et le volume avant (15, 115 ; 215, 315),
- un ressort secondaire (60, 160 ; 260, 360), qui est en appui sur la soupape de sécurité (50, 150 ; 250, 350) et sur la soupape principale (20, 120 ; 220, 320) et qui rappelle la soupape de sécurité (50, 150 ; 250, 350) vers sa position de fermeture en butée avant contre la soupape principale, et
- un poussoir (70, 170 ; 270, 370), mobile dans la soupape principale (20, 120 ; 220, 320) entre une configuration avancée, dans laquelle la soupape de sécurité (50, 150 ; 250, 350) est en position de fermeture, et une configuration reculée, dans laquelle le poussoir déplace la soupape de sécurité (50, 150 ; 250, 350) en position d'ouverture, le raccord fluidique étant configuré pour évoluer entre :
- une configuration désaccouplée, dans laquelle les corps (5, 105 ; 205, 305) des éléments de raccord mâle et femelle sont séparés l'un de l'autre et les soupapes principales et de sécurité (20, 120, 50, 150 ; 220, 320, 250, 350) des deux éléments de raccord sont en position de fermeture, et
- une configuration accouplée, dans laquelle le volume avant (115 ; 315) de l'élément de raccord femelle (101 ; 301) reçoit une partie avant (7 ; 107 ; 207) du corps (5 ; 205) de l'élément de raccord mâle (1 ; 201) en emmanchement et les soupapes principales (20, 120 ; 220, 320) sont en position d'ouverture ;
l'un parmi l'élément de raccord mâle (1 ; 201) et l'élément de raccord femelle (101 ; 301) comprenant au moins un joint d'étanchéité (196, 197 ; 396, 397) qui coopère avec le corps (105 ; 305) de l'élément de raccord femelle (101 ; 301) et avec le corps (5 ; 205) de l'élément de raccord mâle (1 ; 201) en configuration accouplée,
lors d'un passage de la configuration désaccouplée à la configuration accouplée, les poussoirs (70, 170 ; 270, 370) viennent axialement en contact l'un contre l'autre et chaque poussoir déplace la soupape de sécurité (50, 150 ; 250, 350) associée en position d'ouverture, alors que la soupape principale associée (20, 120 ; 220, 320) est en position de fermeture,
**caractérisé en ce que** le raccord fluidique est configuré pour que, lors d'un passage de la configuration désaccouplée à la configuration accouplée :
- ledit au moins un joint d'étanchéité (196, 197 ; 396, 397) coopère avec le corps (105 ; 305) de l'élément de raccord femelle (101 ; 301) et avec le corps (5 ; 205) de l'élément de raccord mâle (1 ; 201), avant que les soupapes de sécurité (50, 150 ; 250, 350) des deux éléments de raccord ne soient déplacées vers leur position d'ouverture, et
- pour au moins l'un des éléments de raccord (1, 101 ; 201, 301), le poussoir (70, 170 ; 270, 370) repousse la soupape principale (20, 120 ; 220, 320) associée vers sa position d'ouverture, une fois que la soupape de sécurité (50, 150 ; 250, 350) associée est en position d'ouverture.

2. Raccord fluidique selon la revendication 1, **caractérisé en ce que**, pour au moins l'un des éléments de raccord (101 ; 301):
- la soupape principale (120 ; 320) comprend une extension avant (136 ; 336), traversée par des ouvertures (138 ; 338) pour le passage de fluide au niveau du passage principal (130 ; 330) en position d'ouverture de ladite soupape principale (120 ; 320), et
- le corps (105 ; 305) dudit élément de raccord comprend une surface radiale interne (112 ; 312) guidant radialement l'extension avant (136 ; 336) dans ledit corps (105 ; 305).

3. Raccord fluidique selon la revendication 2, **caractérisé en ce que** le ressort principal (124 ; 324) de l'élément de raccord (101 ; 301) qui comprend l'extension avant (136 ; 336) est disposé radialement entre le corps (105 ; 305) dudit élément de raccord (101 ; 301) et l'extension avant (136 ; 336).

4. Raccord fluidique selon l'une quelconque des revendications 2 ou 3, **caractérisé en ce que** :
- l'extension avant (136 ; 336) est formée dans l'élément de raccord femelle (101 ; 301) et
- l'extension avant (136 ; 336) est en contact axial avec la partie avant (7 ; 107 ; 207) du corps (5 ; 305) de l'élément de raccord mâle (1 ; 201) en configuration accouplée.

5. Raccord fluidique selon l'une quelconque des revendications précédentes, **caractérisé en ce que**, lors d'un passage de la configuration désaccouplée à la configuration accouplée, le poussoir (70, 170 ; 270, 370) de chaque élément de raccord (1, 101 ; 201, 301) vient en butée arrière contre la soupape principale (20, 120 ; 220, 320) associée, et repousse ainsi la soupape principale (20, 120 ; 220, 320) associée vers sa position d'ouverture.

6. Raccord fluidique selon l'une quelconque des revendications précédentes, **caractérisé en ce que**, pour au moins l'un des éléments de raccord (1, 101 ; 201, 301), le passage secondaire (40, 140 ; 240, 340) est ouvert entre la chambre arrière (13, 113 ; 213, 313) et le volume avant (15, 115 ; 215, 315) pour toute position axiale du poussoir (70, 170 ; 270, 370) dudit élément de raccord par rapport à la soupape principale (20, 120 ; 220, 320) associée lorsque ledit poussoir (70, 170 ; 270, 370) est en configuration reculée.

7. Raccord fluidique selon l'une quelconque des revendications précédentes, **caractérisé en ce que**, pour chacun des deux éléments de raccord (1, 101 ; 201, 301), le poussoir (70, 170 ; 270, 370) dépasse vers l'avant de la soupape principale (20, 120 ; 220, 320) associée, quelle que soit la position axiale dudit poussoir (70, 170 ; 270, 370) par rapport à ladite soupape principale (20, 120 ; 220, 320).

8. Raccord fluidique selon l'une quelconque des revendications précédentes, **caractérisé en ce que**, pour au moins l'un des éléments de raccord (1, 101), le poussoir (70, 170) est mobile axialement par rapport à la soupape de sécurité (50, 150) associée.

9. Raccord fluidique selon la revendication 8, **caractérisé en ce qu'**au moins une bille (75, 175), logée à la fois dans une rainure longitudinale (77, 177) de la soupape principale (20, 120) et dans une gorge périphérique (76, 176) du poussoir (70, 170), forme une butée avant du poussoir (70, 170) contre la soupape principale (20, 120) en configuration avancée du poussoir.

10. Raccord fluidique selon l'une quelconque des revendications précédentes, **caractérisé en ce que**, pour au moins l'un des éléments de raccord (201, 301), le poussoir (270, 370) et la soupape de sécurité (250, 350) associée sont solidaires axialement.

11. Raccord fluidique selon l'une quelconque des revendications précédentes, **caractérisé en ce que** chaque poussoir (70, 170 ; 270, 370) comprend une surface d'extrémité avant (81, 181 ; 281, 381), les surfaces d'extrémité avant des deux poussoirs étant de forme complémentaire et configurées pour coopérer mutuellement, lorsque les poussoirs (70, 170 ; 270, 370) sont mis en contact l'un contre l'autre lors du passage de la configuration désaccouplée à la configuration accouplée.

12. Raccord fluidique selon la revendication 11, **caractérisé en ce que** l'une des surfaces d'extrémité avant (81 ; 381) est convexe et de forme conique centrée sur l'axe central longitudinal (X11 ; X211) de l'élément de raccord (1 ; 301) auquel ladite surface d'extrémité avant (81 ; 381) appartient, tandis que l'autre surface d'extrémité avant (181 ; 281) est concave et de forme conique complémentaire, centrée sur l'axe central longitudinal (X111 ; X311) de l'autre élément de raccord (101 ; 201).

13. Raccord fluidique selon l'une quelconque des revendications précédentes, **caractérisé en ce que**, pour au moins l'un des éléments de raccord (1, 101 ; 201, 301) :
- la soupape principale (20, 120 ; 220, 320) comprend une tige avant (27, 127 ; 227, 327), s'étendant en avant de la partie obturante (29, 129 ; 229, 329) et logeant le poussoir (70, 170 ; 270, 370), la tige avant (27, 127 ; 227, 327) étant de diamètre réduit comparativement à la partie obturante ; et
- la longueur (d70, d170) dudit poussoir (70, 170 ; 270, 370) est supérieure à deux fois le diamètre interne (d15, d115) du volume avant (15, 115 ; 215, 315) dudit élément de raccord.

14. Raccord fluidique selon l'une quelconque des revendications précédentes, **caractérisé en ce que**, pour au moins l'un des éléments de raccord (1, 101 ; 201, 301) :
- l'élément de raccord (1 ; 201) comprend une pièce arrière (28 ; 228), solidaire du corps (5 ; 205), et comprenant une jupe (35 ; 235),
- le ressort principal (24 ; 224) dudit élément de raccord est en appui sur la pièce arrière (28 ; 228) et sur la soupape principale (20 ; 220) dudit élément de raccord,
- ladite soupape principale (20 ; 220) comprend une tige arrière (32 ; 232) qui s'étend en arrière de la partie obturante (29 ; 229) et qui est guidée radialement dans la pièce arrière (28, 228), et
- la jupe (35 ; 235) de la pièce arrière (28 ; 228) est radialement interposée entre ledit ressort principal (24 ; 224) et le fluide en circulation dans la chambre arrière (13 ; 213) dudit élément de raccord (1 ; 201) en configuration accouplée.

15. Raccord fluidique selon l'une quelconque des revendications précédentes, **caractérisé en ce que** :
- le corps (5 ; 205) de l'élément de raccord mâle (1 ; 201) comprend une surface externe avant (88 ; 288) cylindrique et une surface externe intermédiaire (89 ; 289) cylindrique, la surface externe intermédiaire (89) étant décalée vers l'arrière par rapport à la surface externe avant (88 ; 288) et de diamètre supérieur au diamètre de la surface externe avant (88 ; 288) ;
- le corps (105 ; 305) de l'élément de raccord femelle (101 ; 301) comprend une surface interne avant (188 ; 388) cylindrique et une surface interne intermédiaire (189 ; 389) cylindrique, qui délimitent en partie le volume avant (115 ; 315) de l'élément de raccord femelle (101 ; 301), la surface interne intermédiaire (189 ; 389) étant décalée vers l'arrière par rapport à la surface interne avant (188 ; 388) et de diamètre inférieur au diamètre de la surface interne avant (188 ; 388) ; et
- en configuration accouplée, la surface externe intermédiaire (89 ; 289) est emmanchée avec la surface interne avant (188 ; 388) et la surface externe avant (88 ; 288) est emmanchée avec la surface interne intermédiaire (189 ; 389).

## Patentansprüche

1. Fluidkupplung mit einem Einsteckkupplungselement (1; 201) und einem Aufnahmekupplungselement (101; 301), wobei jedes Kupplungselement (1, 101; 201, 301) jeweils umfasst:
- einen Körper (5, 105; 205, 305), der entlang einer mittleren Längsachse (X11, X111; X211, X311) einen Innenkanal (11, 111; 211, 311) definiert, der ein vorderes Volumen (15, 115; 215, 315), das an der Vorderseite des Körpers (5, 105; 205, 305) mündet, und eine hintere Kammer (13, 113; 213, 313) umfasst,
- ein Hauptventil (20, 120; 220, 320), das in dem Körper (5, 105; 205, 305) zwischen einer Offenstellung, bei der ein Hauptdurchgang (30, 130; 230, 330) zwischen dem Hauptventil (20, 120; 220, 320) und dem Körper für den Durchfluss des Fluids zwischen der hinteren Kammer (13, 113; 213, 313) und dem vorderen Volumen (15, 115; 215, 315) offen ist, und einer geschlossenen Stellung beweglich ist, in der ein verschließendes Teil (29, 129; 229, 329) des Hauptventils (20, 120; 22, 320) in einem vorderen Anschlag gegen den Körper (5, 105; 205, 305) befindet und den Hauptdurchgang (30, 130; 230, 330) verschließt,
- eine Hauptfeder (24, 124; 224, 324), die das Hauptventil (20, 120; 220, 320) in seine geschlossenen Stellung zurückbringt,
- ein Sicherheitsventil (50, 150; 250, 350), das in Bezug auf das Hauptventil zwischen einer geschlossenen Stellung und einer Offenstellung eines Sekundärdurchgangs (40, 140; 240, 340) beweglich ist, der durch das Hauptventil (20, 120; 220, 320) zwischen der hinteren Kammer (13, 113; 213, 313) und dem vorderen Volumen (15, 115; 215, 315) eingearbeitet ist,
- eine Sekundärfeder (60, 160; 260, 360), die sich an dem Sicherheitsventil (51, 150; 250, 350) und an dem Hauptventil (20, 120; 220, 320) abstützt und die das Sicherheitsventil (51, 150; 250, 350) in seine geschlossenen Stellung im vorderen Anschlag gegen das Hauptventil vorspannt, und
- ein Stößelelement (70, 170; 250, 370), das in dem Hauptventil (20, 120; 220, 320) zwischen einer vorgerückten Konfiguration, in der das Sicherheitsventil (51, 150; 250, 350) in einer Verschlussposition ist, und einer zurückgezogenen Konfiguration, in der das Stößelelement das Sicherheitsventil (51, 150; 250, 350) in die Offenstellung verschiebt, beweglich ist,
wobei die Fluidkupplung ausgebildet ist, sich zu bewegen zwischen:
- einer entkuppelten Konfiguration, in der die Körper (5, 105; 205, 305) des Kupplungseinsteckelementes und des Kupplungsaufnahmeelementes voneinander getrennt sind und die Haupt- und Sicherheitsventile (20, 120, 50, 150; 220, 320, 250, 350) der zwei Kupplungselemente in der geschlossener Stellung sind,
- einer gekuppelten Konfiguration, in der das vordere Volumen (115; 315) des Aufnahmekupplungselementes (101; 301) ein Vorderteil (7; 107; 207) des Körpers (5; 205) des Einsteckkupplungselements (1; 201) eingesteckt aufnimmt und die Hauptventile (20, 120; 220, 320) in der Offenstellung sind; wobei
eines des Einsteckkupplungselementes (1; 201) und des Aufnahmekupplungselementes (101; 301) mindestens eine Dichtung (196, 197; 396, 397) umfasst, die mit dem Körper (105; 305) des Aufnahmekupplungselementes (101; 301) und dem Körper (5; 205) des Einsteckkupplungselementes (1; 201) in der gekuppelten Konfiguration zusammenarbeitet,
bei einem Übergang von der entkuppelten Konfiguration in die gekuppelten Konfiguration die Stößelelemente (70, 170; 270, 370) axial gegeneinander in Kontakt kommen und jedes Stößelelement das zugeordnete Sicherheitsventil (51, 150; 250, 350) in die Offenstellung verschiebt, während das zugeordnete Hauptventil (20, 120; 220, 320) in der geschlossenen Stellung ist,
**dadurch gekennzeichnet, dass** die Fluidkupplung ausgebildet ist, während eines Überganges von der entkuppelten Konfiguration in die gekuppelten Konfiguration:
- die mindestens eine Dichtung (196, 197; 396, 397) mit dem Körper (105; 305) des Aufnahmekupplungselementes (101; 301) und mit dem Körper (5; 205) des Einsteckkupplungselementes zusammenarbeitet, bevor die Sicherheitsventile (51, 150; 250, 350) der zwei Kupplungselemente in ihre Offenstellungen verschoben werden, und
- für mindestens eines der Kupplungselemente (1, 101; 201, 301) das Stößelelement (70, 170; 200, 370) das zugeordnete Hauptventil in seine Offenstellung zurückdrückt, sobald das zugeordnete Sicherheitsventil (51, 150; 250, 350) in der Offenstellung ist.

2. Fluidkupplung nach Anspruch 1, **dadurch gekennzeichnet, dass** für mindestens eines der Kupplungselemente (101; 301):
- das Hauptventil (120; 320) eine vordere Verlängerung (136; 336) umfasst, die von Öffnungen (138; 338) für den Durchfluss des Fluids an dem Hauptdurchgang (130; 330) in der Offenstellung des Hauptventils (120; 320) durchgriffen ist, und
- der Körper (105; 305) des Kupplungselementes eine radiale Innenfläche (112; 312) umfasst, die radial die vordere Verlängerung (136; 303 36) in dem Körper (105; 305) führt.

3. Fluidkupplung nach Anspruch 2, **dadurch gekennzeichnet, dass** die Hauptfeder (124; 324) des Kupplungselementes (101; 301), das die vordere Verlängerung (136; 336) umfasst, radial zwischen dem Körper (105; 305) des Kupplungselementes (101; 301) und der vorderen Verlängerung (136; 336) angeordnet ist.

4. Fluidkupplung nach einem beliebigen der Ansprüche 2 oder 3, **dadurch gekennzeichnet, dass**:
- die vordere Verlängerung (136; 336) in dem Aufnahmekupplungselement (101; 301) gebildet ist und
- die vordere Verlängerung (136; 336) in axialem Kontakt mit dem Vorderteil (7; 107; 207) des Körpers (5; 305) des Einsteckkupplungselementes (1; 201) in der gekuppelten Konfiguration ist.

5. Fluidkupplung nach einem beliebigen der vorhergehenden Ansprüche, **dadurch gekennzeichnet, dass** bei einem Übergang von der entkuppelten Konfiguration in die gekuppelte Konfiguration das Stößelelement (70, 170; 270, 370) jedes Kupplungselementes (1, 101; 201, 301) in einen hinteren Anschlag gegen das zugeordnete Hauptventil (20, 120; 220, 320) kommt und so das zugeordnete Hauptventil (20, 120; 220, 320) in seine Offenstellung schiebt.

6. Fluidkupplung nach einem beliebigen der vorhergehenden Ansprüche, **dadurch gekennzeichnet, dass** für mindestens eines der Kupplungselemente (1, 101; 201, 301) der Sekundärdurchgang (40, 140; 240, 340) zwischen der hinteren Kammer (13, 113; 213, 313) und dem vorderen Volumen (15, 115; 215, 315) für jede axiale Position des Stößelelementes (70, 170; 270, 370) des Kupplungselementes in Bezug auf das zugeordnete Hauptventil (2020; 220, 320) offen ist, wenn das Stößelelement (70, 170; 270, 370) in einer zurückgezogenen Konfiguration ist.

7. Fluidkupplung nach einem beliebigen der vorhergehenden Ansprüche, **dadurch gekennzeichnet, dass** für jedes der zwei Kupplungselemente (1, 101; 201, 301) das Stößelelement (70, 170; 270, 370) nach vorn bezüglich des zugeordneten Hauptventils (20, 120; 220, 320) vorsteht, wie auch immer die axiale Position des Stößelelementes in Bezug auf das Hauptventil (20, 120; 220, 320) sei.

8. Fluidkupplung nach einem beliebigen der vorhergehenden Ansprüche, **dadurch gekennzeichnet, dass** für mindestens eines der Kupplungselemente (1, 101) das Stößelelement (70, 150) axial in Bezug auf das zugeordnete Sicherheitsventil (51, 150) beweglich ist.

9. Fluidkupplung nach Anspruch 8, **dadurch gekennzeichnet, dass** mindestens eine Kugel (75, 175), die sowohl in einer Längsnut (77, 177) des Hauptventils (20, 120) als auch in einer Umfangsnut (76, 176) des Stößelelementes (70, 170) gelagert ist, einen vorderen Anschlag des Stößelelementes (50, 170) gegen das Hauptventil (20, 120) in der vorgerückten Konfiguration des Stößelelementes bildet.

10. Fluidkupplung nach einem beliebigen der vorhergehenden Ansprüche, **dadurch gekennzeichnet, dass** für mindestens eines der Kupplungselemente (201, 301) das Stößelelement (72, 370) und das zugeordnete Sicherheitsventil (250, 350) axial verbunden sind.

11. Fluidkupplung nach einem beliebigen der vorhergehenden Ansprüche, **dadurch gekennzeichnet, dass** jedes Stößelelement (70, 170; 270, 370) eine vordere Stirnfläche (81, 181; 281, 381) umfasst, wobei die vorderen Stirnflächen der zwei Stößelelemente eine komplementäre Form aufweisen und ausgebildet sind, wechselseitig zusammenzuarbeiten, wenn die Stößelelemente (70, 170; 270, 73) während des Überganges von der entkuppelten Konfiguration in die gekuppelte Konfiguration gegeneinander in Kontakt gebracht werden.

12. Fluidkupplung nach Anspruch 11, **dadurch gekennzeichnet, dass** eine der vorderen Stirnflächen (81; 381) konvex ist und eine auf die mittlere Längsachse (X11; X211) des Kupplungselementes (1; 301), zu dem die vordere Stirnfläche (81; 381) gehört, zentrierte Kegelform aufweist, während die andere vordere Stirnfläche (181; 281) konkav ist und von einer auf die mittlere Längsachse (X111; X311) des anderen Kupplungselementes (101; 201) zentrierte komplementäre Kegelform aufweist.

13. Fluidkupplung nach einem beliebigen der vorhergehenden Ansprüche, **dadurch gekennzeichnet, dass** für mindestens eines der Kupplungselemente (1, 101; 201, 301):
- das Hauptventil (20, 120; 220, 320) einen vorderen Schaft (27, 127; 227, 327) umfasst, der sich von dem verschließenden Teil (29, 129; 229, 329) nach vorn erstreckt und das Stößelelement (70, 170; 270, 370) aufnimmt, wobei der vordere Schaft (27, 127; 227, 327) von einem im Vergleich zu dem verschließenden Teil verringerten Durchmesser ist; und
- die Länge (d70, d170) des Stößelelementes (70, 170; 270, 370) zweimal größer ist als der Innendurchmesser (d15, d115) des vorderen Volumens (15, 115; 215, 315) des Kupplungselementes.

14. Fluidkupplung nach einem beliebigen der vorhergehenden Ansprüche, **dadurch gekennzeichnet, dass** für mindestens eines der Kupplungselemente (1, 101; 201, 301);
- das Kupplungselement (1; 201) ein mit dem Körper (5; 205) verbundenes hinteres Teil (28; 228) umfasst, das eine Schürze (35; 235) aufweist,
- die Hauptfeder (24; 224) des Kupplungselementes sich an dem hinteren Teil (28; 228) und an dem Hauptventil (20; 220) des Kupplungselementes abstützt,
- das Hauptventil (20; 220) einen hinteren Schaft (32; 232) umfasst, der sich zu dem verschließenden Teil (29; 229) nach hinten erstreckt und radial in dem hinteren Teil (28, 228) geführt ist und
- die Schürze (35; 235) des hinteren Teils (28; 228) radial zwischen der Hauptfeder (24; 224) und dem in der hinteren Kammer (13; 213) des Kupplungselementes (1; 201) in der gekuppelten Konfiguration zirkulierenden Fluids angeordnet ist.

15. Fluidkupplung nach einem beliebigen der vorhergehenden Ansprüche, **dadurch gekennzeichnet, dass**:
- der Körper (5; 205) des Einsteckkupplungselementes (1; 201) eine vordere zylindrische Außenfläche (88; 288) und eine zwischenliegende zylindrische Außenfläche umfasst, wobei die zwischenliegende Außenfläche (89) nach hinten in Bezug auf die vordere Außenfläche (88; 288) versetzt ist und einen größeren Durchmesser als der Durchmesser der vorderen Außenfläche (88; 288) aufweist;
- der Körper (105; 305) des Aufnahmekupplungselementes (101; 301) eine vordere zylindrische Innenfläche (189; 389) umfasst, die teilweise das vordere Volumen (115; 315) des Aufnahmekupplungselementes (101; 301) begrenzt, wobei die zwischenliegende Innenfläche (189; 389) nach hinten in Bezug auf die vordere Innenfläche (188; 388) versetzt ist und einen Durchmesser kleiner als der Durchmesser der vorderen Innenfläche (188; 388) aufweist; und
- in der gekuppelten Stellung die zwischenliegende Außenfläche (89; 289) in die vordere Innenfläche (188; 388) eingreift und die vordere Außenfläche (88; 288) in die zwischenliegende Innenfläche (189, 389) eingreift.

## Claims

1. A fluid coupling, comprising a male coupling element (1; 201) and a female coupling element (101; 301), each coupling element (1, 101; 201, 301) respectively comprising:
- a body (5, 105; 205, 305), defining, along a longitudinal central axis (X11, X111; X211, X311), an inner pipe (11, 111; 211, 311) comprising a front volume (15, 115; 215, 315), emerging at the front of the body (5, 105; 205, 305), and a rear chamber (13, 113; 213, 313),
- a main valve (20, 120; 220, 320), movable in the body (5, 105; 205, 305) between an open position, in which a main passage (30, 130; 230, 330) is open between the main valve (20, 120; 220, 320) and the body, for the passage of the fluid between the rear chamber (13, 113; 213, 313) and the front volume (15, 115; 215, 315), and a closed position, in which a closing part (29, 129; 229, 329) of the main valve (20, 120; 220, 320) is abutting forwardly against the body (5, 105; 205, 305) and closes the main passage (30, 130; 230, 330),
- a main spring (24, 124; 224, 324), which returns the main valve (20, 120; 220, 320) toward its closed position,
- a safety valve (50, 150; 250, 350), movable relative to the main valve between a closed position and an open position of a secondary passage (40, 140; 240, 340), arranged through the main valve (20, 120; 220, 320), between the rear chamber (13, 113; 213, 313) and the front volume (15, 115; 215, 315),
- a secondary spring (60, 160; 260, 360), which bears on the safety valve (50, 150; 250, 350) and on the main valve (20, 120; 220, 320) and which returns the safety valve (50, 150; 250, 350) toward its closed position abutting forwardly against the main valve, and
- a plunger (70, 170; 270, 370), movable in the main valve (20, 120; 220, 320) between a forward configuration, in which the safety valve (50, 150; 250, 350) is in the closed position, and a retracted configuration, in which the plunger moves the safety valve (50, 150; 250, 350) into the open position,
the fluid coupling being configured to move between:
- an unpaired configuration, in which the bodies (5, 105; 205, 305) of the male and female coupling elements are separated from one another and the main and safety valves (20, 120, 50, 150; 220, 320, 250, 350) of the two coupling elements are in the closed position, and
- a paired configuration, in which the front volume (115; 315) of the female coupling element (101; 301) receives a front part (7; 107; 207) of the body (5; 205) of the male coupling element (1; 201) by fitting and the main valves (20, 120; 220, 320) are in the open position;
one from among the male coupling element (1; 201) and the female coupling element (101; 301) comprises at least one sealing gasket (196, 197; 396, 397) that cooperates with the body (105; 305) of the female coupling element (101; 301) and with the body (5; 205) of the male coupling element (1; 201) in the paired configuration,
during a passage from the unpaired configuration to the paired configuration, the plungers (70, 170; 270, 370) come axially into contact against one another and each plunger moves the associated safety valve (50, 150; 250, 350) into the open position, while the associated main valve (20, 120; 220, 320) is in the closed position,
**characterized in that** the fluid coupling is configured so that, during a passage from the unpaired configuration to the paired configuration:
- said at least one sealing gasket (196, 197; 396, 397) cooperates with the body (105; 305) of the female coupling element (101; 301) and with the body (5; 205) of the male coupling element (1; 201), before the safety valves (50, 150; 250, 350) of the two coupling elements are moved toward their open position, and
- for at least one of the coupling elements (1, 101; 201, 301), the plunger (70, 170; 270, 370) pushes the associated main valve (20, 120; 220, 320) back toward its open position, once the associated safety valve (50, 150; 250, 350) is in the open position.

2. The coupling according to claim 1, **characterized in that**, for at least one of the coupling elements (101; 301):
- the main valve (120; 320) comprises a forward extension (136; 336), passed through by openings (138; 338) for the passage of fluid at the main passage (130; 330) in the open position of said main valve (120; 320), and
- the body (105; 305) of said coupling element comprises an inner radial surface (112; 312) radially guiding the forward extension (136; 336) in said body (105; 305).

3. The fluid coupling according to claim 2, **characterized in that** the main spring (124; 324) of the coupling element (101; 301) that comprises the forward extension (136; 336) is positioned radially between the body (105; 305) of said coupling element (101; 301) and the forward extension (136; 336).

4. The fluid coupling according to any one of claims 2 or 3, **characterized in that**:
- the forward extension (136; 336) is formed in the female coupling (101; 301) and
- the forward extension (136; 336) is in contact with the front part (7; 107; 207) of the body (5; 305) of the male coupling element (1; 201) in the paired configuration.

5. The fluid coupling according to any one of the preceding claims, **characterized in that**, during a passage from the unpaired configuration to the paired configuration, the plunger (70, 170; 270, 370) of each coupling element (1, 101; 201, 301) abuts rearwardly against the associated main valve (20, 120; 220, 320), and thus pushes the associated main valve (20, 120; 220, 320) back toward its open position.

6. The fluid coupling according to any one of the preceding claims, **characterized in that**, for at least one of the coupling elements (1, 101; 201, 301), the secondary passage (40, 140; 240, 340) is open between the rear chamber (13, 113; 213, 313) and the front volume (15, 115; 215, 315) for any axial position of the plunger (70, 170; 270, 370) of said coupling element relative to the associated main valve (20, 120; 220, 320) when said plunger (70, 170; 270, 370) is in the withdrawn configuration.

7. The fluid coupling according to any one of the preceding claims, **characterized in that**, for each of the two coupling elements (1, 101; 201, 301), the plunger (70, 170; 270, 370) protrudes toward the front of the associated main valve (20, 120; 220, 320), irrespective of the axial position of said plunger (70, 170; 270, 370) relative to said main valve (20, 120; 220, 320).

8. The fluid coupling according to any one of the preceding claims, **characterized in that**, for at least one of the coupling elements (1, 101), the plunger (70, 170) is axially movable relative to the associated safety valve (50, 150).

9. The fluid coupling according to claim 8, **characterized in that** at least one ball (75, 175), housed both in a longitudinal slot (77, 177) of the main valve (20, 120) and in a peripheral groove (76, 176) of the plunger (70, 170), forms a front stop of the plunger (70, 170) against the main valve (20, 120) in the forward configuration of the plunger.

10. The fluid coupling according to any one of the preceding claims, **characterized in that**, for at least one of the coupling elements (201, 301), the plunger (270, 370) and the safety valve (250, 350) are axially secured.

11. The fluid coupling according to any one of the preceding claims, **characterized in that** each plunger (70, 170; 270, 370) comprises a front end surface (81, 181; 281, 381), the front end surfaces of the two plungers having a complementary shape and being configured to cooperate with one another, when the plungers (70, 170; 270, 370) are placed in contact against one another during the passage from the unpaired configuration to the paired configuration.

12. The fluid coupling according to claim 11, **characterized in that** one of the front end surfaces (81; 381) is convex and has a conical shape centered on the central longitudinal axis (X11; X211) of the coupling element (1; 301) to which said front end surface (81; 381) belongs, while the other front end surface (181; 281) is concave and has a complementary conical shape, centered on the central longitudinal axis (X111; X311) of the other coupling element (101; 201).

13. The fluid coupling according to any one of the preceding claims, **characterized in that**, for at least one of the coupling elements (1, 101; 201, 301):
- the main valve (20, 120; 220, 320) comprises a front rod (27, 127; 227, 327), extending in front of the closing part (29, 129; 229, 329) and housing the plunger (70, 170; 270, 370), the front rod (27, 127; 227, 327) having a smaller diameter compared to the closing part; and
- the length (d70, d170) of said plunger (70, 170; 270, 370) is greater than twice the inner diameter (d15, d115) of the front volume (15, 115; 215, 315) of said coupling element.

14. The fluid coupling according to any one of the preceding claims, **characterized in that**, for at least one of the coupling elements (1, 101; 201, 301):
- the coupling element (1; 201) comprises a rear part (28; 228), secured to the body (5; 205), and comprising a skirt (35; 235),
- the main spring (24; 224) of said coupling element bears on the rear part (28; 228) and on the main valve (20; 220) of said coupling element,
- said main valve (20; 220) comprises a rear rod (32; 232) that extends behind the closing part (29; 229) and that is guided radially in the rear part (28, 228), and
- the skirt (35; 235) of the rear part (28; 228) is radially inserted between said main spring (24; 224) and the fluid circulating in the rear part (13; 213) of said coupling element (1; 201) in the paired configuration.

15. The fluid coupling according to any one of the preceding claims, **characterized in that**:
- the body (5; 205) of the male coupling element (1; 201) comprises a cylindrical front outer surface (88; 288) and a cylindrical intermediate outer surface (89; 289), the intermediate outer surface (89) being offset toward the rear relative to the front outer surface (88; 288) and having a diameter larger than the diameter of the front outer surface (88; 288);
- the body (105; 305) of the female coupling element (101; 301) comprises a cylindrical front inner surface (188; 388) and a cylindrical intermediate inner surface (189; 389), which delimit part of the front volume (115; 315) of the female coupling element (101; 301), the intermediate inner surface (189; 389) being offset toward the rear relative to the front inner surface (188; 388) and having a diameter smaller than the diameter of the front inner surface (188; 388); and
- in the paired configuration, the intermediate outer surface (89; 289) is fitted with the front inner surface (188; 388) and the front outer surface (88; 288) is fitted with the intermediate inner surface (189; 389).
